# EUROPÄISCHE PATENTSCHRIFT

(11) **EP 1 781 743 B1**
(45) Veröffentlichungstag und Bekanntmachung des Hinweises auf die Patenterteilung: **02.01.2008**
(21) Anmeldenummer: 05772813.1
(22) Anmeldetag: 03.08.2005
(51) Int. Cl.: C09D 11/00, C09D 11/10, C08G 18/00

(54) **WASSERLÖSLICHE STRAHLUNGSHÄRTBARE PRODUKTE UND IHRE VERWENDUNG**
WATER-SOLUBLE PRODUCTS HARDENING WITH RADIATION AND USE THEREOF
PRODUITS RADIODURCISSABLES SOLUBLES DANS L'EAU ET LEUR UTILISATION

(30) Priorität: 19.08.2004 DE 102004040398
(43) Veröffentlichungstag der Anmeldung: 09.05.2007
(73) Patentinhaber: BASF Aktiengesellschaft, 67056 Ludwigshafen (DE)
(72) Erfinder: KRÜGER, Christian, 55291 Saulheim (DE); BRUCHMANN, Bernd, 67251 Freinsheim (DE); DIELEMAN, Cedric, F-67630 Scheibenhard (FR); KLUGE, Michael, 67547 Worms (DE)
(86) Internationale Anmeldenummer: PCT/EP2005/008409
(87) Internationale Veröffentlichungsnummer: WO 2006/018136

(56) Entgegenhaltungen:
- WO-A-02/36695
- WO-A-03/091347

## Beschreibung

Die vorliegende Erfindung betrifft die Verwendung von wasserlöslichen strahlungshärtbaren Produkten (A), erhältlich durch Vermischen und gegebenenfalls Umsetzung von
mindestens einem hyperverzweigten Polyurethan (a) mit
mindestens einer Verbindung der allgemeinen Formel II(b)
oder durch Synthese von
mindestens einem hyperverzweigten Polyurethan (a)
in Gegenwart von mindestens einer Verbindung der allgemeinen Formel II(b)
zur Herstellung von wässrigen Tinten für das Ink-Jet-Verfahren.

Weiterhin betrifft die vorliegende Erfindung wässrige Tinten für das Ink-Jet-Verfahren mit einer dynamischen Viskosität im Bereich von 2 bis 80 mPa·s, gemessen bei 23°C, enthaltend
(A) mindestens ein wasserlösliches strahlungshärtbares Produkt, erhältlich durch
   Vermischen und gegebenenfalls Umsetzung von
   mindestens einem hyperverzweigten Polyurethan (a) mit
   mindestens einer Verbindung der allgemeinen Formel II(b)
   oder durch Synthese von
   mindestens einem hyperverzweigten Polyurethan (a)
   in Gegenwart von mindestens einer Verbindung mit mindestens einer ethylenischen Doppelbindung pro Molekül (b),
   weiterhin
(B) mindestens ein Pigment.

Weiterhin betrifft die vorliegende Erfindung Verfahren zur Herstellung von Ink-Jet-Tinten, Verfahren zum Bedrucken von flächigen Substraten nach dem Ink-Jet-Verfahren und bedruckte flächige Substrate.

An Aufzeichnungsflüssigkeiten und insbesondere Tinten, die beim Ink-Jet-Verfahren (Tintenstrahldruckverfahren wie Thermal Ink Jet, Piezo Ink Jet, Continuous Ink Jet, Valve Jet, Transferdruckverfahren) eingesetzt werden, werden eine Reihe von Anforderungen gestellt: Sie müssen zum Drucken geeignete Viskosität und Oberflächenspannung aufweisen, sie müssen lagerstabil sein, d.h., sie sollen nicht koagulieren oder flokulieren, und sie dürfen nicht zur Verstopfung der Druckerdüse führen, was insbesondere bei dispergierten, also nicht gelöste Farbmittelteilchen enthaltenden Tinten problematisch sein kann. Die Anforderungen an die Lagerstabilität dieser Aufzeichnungsflüssigkeiten und insbesondere Tinten beinhaltet zusätzlich, dass sich dispergierte Farbmittelteilchen nicht absetzen. Weiterhin müssen die Tinten im Falle des Continuous Ink Jet stabil gegen den Zusatz von Leitsalzen sein und bei Erhöhung des Ionengehaltes keine Tendenz zum Ausflocken zeigen. Außerdem müssen die erhaltenen Drucke den koloristischen Anforderungen genügen, d.h. hohe Brillanz und Farbtiefe zeigen, und gute Echtheiten, z.B. Reibechtheit, Lichtechtheit, Wasserechtheit und Nassreibechtheit, gegebenenfalls nach Nachbehandlung wie beispielsweise Fixierung, und gutes Trocknungsverhalten aufweisen.

Um besonders gute Echtheiten wie beispielsweise Reibechtheit, Nassreibechtheit und Waschechtheit von bedruckten Substraten zu gewährleisten, kann man die Drucke durch sogenannte Strahlungshärtung fixieren. Dazu kann man sogenannte strahlungshärtbare Tinten einsetzen, s. beispielsweise US 5,623,001 und EP 0 993 495. Strahlungshärtbare Ink-Jet-Tinten enthalten üblicherweise ein Material, dass durch Einstrahlung von aktinischer Strahlung gehärtet werden kann. Außerdem kann man strahlungshärtbaren Ink-Jet-Tinten einen Photoinitiator beifügen.

Problematisch ist jedoch, dass in einigen Fällen die Strahlungshärtung nicht gleichmäßig über das bedruckte Substrat erfolgt. Man beobachtet eine sehr gute Aushärtung an einigen Stellen, während an anderen Stellen schlechte Aushärtung festzustellen ist, sogenannte "soft spots". Durch eine ungleichmäßige Aushärtung werden an einigen Stellen die Reibechtheiten verschlechtert, außerdem verschlechtert sich der Griff von bedruckten Substraten, was insbesondere bei bedruckten textilen Substraten unerwünscht ist. Gesucht sind also Tinten für das Ink-Jet-Verfahren, die sich besonders gleichmäßig aushärten lassen.

Es bestand die Aufgabe, Tinten für das Ink-Jet-Verfahren bereit zu stellen, die sich besonders gut durch Einwirkung aktinischer Strahlung aushärten lassen. Weiterhin bestand die Aufgabe, strahlungshärtbare Produkte bereit zu stellen, die sich besonders gut zur Herstellung von Tinten für das Ink-Jet-Verfahren eignen. Weiterhin bestand die Aufgabe, Verfahren zur Herstellung von Tinten für das Ink-Jet-Verfahren bereit zu stellen. Schließlich bestand die Aufgabe, bedruckte Substrate und insbesondere bedruckte textile Substrate bereit zu stellen, die einen besonders guten Griff und gute Echtheiten aufweisen.

Demgemäß wurde die eingangs definierte Verwendung von wasserlöslichen strahlungshärtbaren Produkten (A) und die eingangs definierten Tinten für das Ink-Jet-Verfahren gefunden.

Im Rahmen der vorliegenden Erfindung werden die Ausdrücke "Tinten für das Ink-Jet-Verfahren" und "Ink-Jet-Tinten" äquivalent verwendet.

Die erfindungsgemäße Verwendung geht von solchen wasserlöslichen strahlungshärtbaren Produkten (A) aus, die erhältlich sind
durch Vermischen und gegebenenfalls Umsetzung von
mindestens einem hyperverzweigten Polyurethan (a) mit
mindestens einer Verbindung der allgemeinen Formel II(b)
oder durch Synthese von
mindestens einem hyperverzweigten Polyurethan (a)
in Gegenwart von mindestens einer Verbindung der allgemeinen Formel II(b).

Dabei wird im Folgenden Vermischen und gegebenenfalls Umsetzung von
mindestens einem hyperverzweigten Polyurethan (a) mit
mindestens einer Verbindung der allgemeinen Formel II(b)
auch als Weg 1 bezeichnet.

Synthese von
mindestens einem hyperverzweigten Polyurethan (a)
in Gegenwart von mindestens einer Verbindung mit mindestens einer ethylenischen Doppelbindung pro Molekül (b)
wird auch als Weg 2 bezeichnet.

Unter hyperverzweigten Polyurethanen (a) sind im Rahmen der vorliegenden Erfindung nicht nur solche Polymere zu verstehen, die ausschließlich durch Urethangruppen verknüpft sind, sondern in einem allgemeineren Sinne Polymere, die durch Umsetzung von Di- oder Polyisocyanaten mit Verbindungen erhalten werden können, die aktive Wasserstoffatome enthalten. Polyurethane im Sinne der vorliegenden Erfindung können also neben Urethangruppen auch Harnstoff-, Allophanat-, Biuret-, Carbodiimid-, Amid-, Ester, Ether-, Uretonimin-, Uretdion-, Isocyanurat- oder Oxazolidingruppen enthalten. Als Übersicht sei beispielhaft genannt: Kunststoffhandbuch/Saechtling, 26. Auflage, Carl-Hanser-Verlag, München 1995, Seite 491 ff. Insbesondere enthalten Polyurethane im Sinne der vorliegenden Erfindung Harnstoffgruppen.

Hyperverzweigte Polyurethane (a) sind molekular und strukturell uneinheitlich. Sie unterscheiden sich durch ihre molekulare Uneinheitlichkeit von Dendrimeren und sind mit erheblich geringerem Aufwand herzustellen.

Hyperverzweigte Polyurethane (a) stellt man bevorzugt aus ABₓ-Monomeren her, das sind Monomere, die z.B. sowohl Isocyanat-Gruppen sowie Gruppen, die mit Isocyanat-Gruppen unter Bildung einer Verknüpfung reagieren können, aufweisen und weiterhin natürlich einen Spacer, durch den Isocyanatgruppen und Gruppen, die mit Isocyanat-Gruppen unter Bildung einer Verknüpfung reagieren können, verknüpft sind. Bei x handelt es sich um eine natürliche Zahl von 2 bis 8. Bevorzugt beträgt x 2 oder 3. Entweder handelt es sich bei A um Isocyanat-Gruppen und bei B um mit Isocyanat zur Reaktion fähige Gruppen oder es kann der umgekehrte Fall vorliegen.

Bei mit Isocyanat-Gruppen zur Reaktion fähigen Gruppen handelt es sich bevorzugt um OH-, NH₂-, NH-, SH- oder COOH-Gruppen.

Die Synthese der zur Ausführung der vorliegenden Erfindung eingesetzten hyperverzweigten Polyurethane (a) kann beispielsweise wie im Folgenden geschildert durchgeführt werden.

ABₓ-Monomere sind in bekannter Art und Weise durch verschiedene Techniken herstellbar.

ABₓ-Monomere können beispielsweise nach der in WO 97/02304 offenbarten Methode unter Anwendung von Schutzgruppentechniken synthetisiert werden. Beispielhaft sei diese Technik an der Herstellung eines AB₂-Monomers aus 2,4-Toluylendiisocyanat (TDI) und Trimethylolpropan erläutert. Zunächst wird eine der Isocyanat-Gruppen des TDI in bekannter Art und Weise verkappt, beispielsweise durch Umsetzung mit einem Oxim. Die verbleibende freie NCO-Gruppe wird mit Trimethylolpropan umgesetzt, wobei eine der drei OH-Gruppen mit der Isocyanat-Gruppe reagiert. Nach Abspalten der Schutzgruppe wird ein Molekül mit einer Isocyanat-Gruppe und zwei OH-Gruppen erhalten.

Besonders vorteilhaft können die ABₓ-Monomere nach der von DE-A 199 04 444 offenbarten Methode synthetisiert werden, bei der keine Schutzgruppen erforderlich sind. Bei dieser Methode werden Di- oder Polyisocyanate eingesetzt und mit Verbindungen, die mindestens zwei mit Isocyanatgruppen zur Reaktion fähige Gruppen aufweisen, umgesetzt. Zumindest einer der Reaktionspartner weist Gruppen mit gegenüber dem anderen Reaktionspartner unterschiedlicher Reaktivität auf. Bevorzugt weisen beide Reaktionspartner Gruppen mit gegenüber dem anderen Reaktionspartner unterschiedlicher Reaktivität auf. Die Reaktionsbedingungen werden so gewählt, dass nur bestimmte zur Reaktion fähige Gruppen miteinander reagieren können.

Bevorzugte Di- und/oder Polyisocyanate mit NCO-Gruppen unterschiedlicher Reaktivität sind insbesondere leicht und billig verfügbare Isocyanate, beispielsweise aromatische Isocyanate wie 2,4-Toluylendiisocyanat (2,4-TDI),2,4'-Diphenylmethandiisocyanat (2,4'-MDI), Triisocyanatotoluol, oder aliphatische Isocyanate, wie Isophorondiisocyanat (IPDI), 2-Butyl-2-ethylpentamethylendiisocyanat, 2-Isocyanatopropylcyclohexylisocyanat, 2,4,4- oder 2,2,4-Trimethylhexamethylendiisocyanat, 2,4'-Methylenbis-(cyclohexyl)diisocyanat und 4-Methyl-cyclohexan-1,3-diisocyanat (H-TDI).

Weitere Beispiele von Isocyanaten mit Gruppen unterschiedlicher Reaktivität sind 1,3-Phenylendiisocyanat, 1,4-Phenylendiisocyanat, 1,5-Naphthylendiisocyanat, Diphenyldiisocyanat, Tolidindiisocyanat und 2,6-Toluylendiisocyanat. Dabei wird durch Addition von einer mit NCO-Gruppen zur Reaktion fähigen Gruppe an eine der beiden zunächst gleich reaktiven NCO-Gruppen die Reaktivität der zweiten NCO-Gruppe durch elektronische Effekte verringert.

Natürlich kann man Mischungen der vorstehend genannten Isocyanate einsetzen.

Als Verbindungen mit mindestens zwei mit Isocyanat zur Reaktion fähigen Gruppen setzt man vorzugsweise di-, tri- oder tetrafunktionelle Verbindungen ein, deren funktionelle Gruppen gegenüber NCO-Gruppen eine unterschiedliche Reaktivität aufweisen. Bevorzugt sind Verbindungen mit mindestens einer primären und mindestens einer sekundären Hydroxylgruppe, mindestens einer Hydroxylgruppe und mindestens einer Mercaptogruppe, besonders bevorzugt mit mindestens einer Hydroxylgruppe und mindestens einer Aminogruppe im Molekül, insbesondere Aminoalkohole, Aminodiole und Aminotriole, da die Reaktivität der Aminogruppe gegenüber der Hydroxylgruppe bei der Umsetzung mit Isocyanat deutlich höher ist.

Beispiele für Verbindungen mit mindestens zwei mit Isocyanat zur Reaktion fähigen Gruppen unterschiedlicher Reaktivität sind Propylenglykol, Glycerin, Mercaptoethanol, Ethanolamin, N-Methylethanol-amin, Diethanolamin, Ethanolpropanolamin, Dipropanolamin, Diisopropanolamin, 2-Amino-1,3-propandiol, 2-Amino-2-methyl-1,3-propandiol oder Tris(hydroxymethyl)-aminomethan. Weiterhin sind auch Mischungen der genannten Verbindungen einsetzbar. Weiterhin wird durch Addition einer NCO-Gruppe an eine der zunächst mit Isocyanat zur Reaktion gleich fähigen OH-Gruppen die Reaktivität der zweiten und insbesondere der dritten mit Isocyanat zur Reaktion fähigen Gruppe durch sterische und elektronische Effekte verringert

Die Herstellung eines AB₂-Monomers sei beispielhaft für den Fall eines Diisocyanates mit einem Aminodiol erläutert. Hierbei wird zunächst ein Mol eines Diisocyanats mit einem Mol eines Aminodiols, beispielsweise N,N-Diethanolamin, bei niedrigen Temperaturen, vorzugsweise im Bereich zwischen -10 bis +30°C, umgesetzt. In diesem Temperaturbereich erfolgt eine praktisch vollständige Unterdrückung der Urethanbildungsreaktion, und die NCO-Gruppen des Isocyanats reagieren ausschließlich mit der Aminogruppe des Aminodiols. Das gebildete AB₂-Monomer weist eine freie NCO-Gruppe sowie zwei freie OH-Gruppen auf und kann zur Synthese eines hyperverzweigten Polyurethans eingesetzt werden.

Durch Erwärmen oder Katalysatorzugabe kann dieses AB₂-Monomer intermolekular zu hyperverzweigten Polyurethan (a) reagieren. Als Katalysatoren für die Herstellung von hyperverzweigten Polyurethanen (a) werden beispielsweise organische Zinnverbindungen wie Zinndiacetat, Zinndioctoat, Dibutylzinndilaurat oder stark basische Amine wie Diazabicyclooctan, Diazabicyclononan, Diazabicycloundecan, Triethylamin, Pentamethyldiethylentriamin, Tetramethyldiaminoethylether oder vorzugsweise Triethylendiamin oder Bis(N,N-dimethylaminoethyl)ether oder auch schwach basische Amine wie beispielsweise Imidazole eingesetzt. Es können auch Mischkatalysatoren aus einer mindestens einer organischen Zinnverbindung und mindestens einem stark basischen Amin eingesetzt werden. Die Katalysatoren werden vorzugsweise in einer Menge von 0,01 bis 10 Gew.-%, vorzugsweise 0,05 bis 5 Gew.-%, bezogen auf Isocyanat, eingesetzt. Die Synthese von hyperverzweigtem Polyurethan (a) erfolgt vorteilhaft ohne vorherige Isolierung des AB₂-Monomers in einem weiteren Reaktionsschritt bei erhöhter Temperatur, vorzugsweise im Bereich zwischen 30 und 80°C. Bei Verwendung des geschilderten AB₂-Monomers mit zwei OH-Gruppen und einer NCO-Gruppe entsteht ein hyperverzweigtes Polyurethan (a), welches pro Molekül eine freie NCO-Gruppe sowie eine vom Polymerisationsgrad abhängige Zahl von OH-Gruppen aufweist. Die Reaktion kann bis zu hohen Umsätzen durchgeführt werden, wodurch sehr hochmolekulare Strukturen erhalten werden. Sie wird vorzugsweise durch Zugabe geeigneter monofunktioneller Verbindungen oder durch Zugabe einer der Ausgangsverbindungen zur Herstellung des AB₂-Monomers beim Erreichen des gewünschten Molekulargewichtes abgebrochen. Je nach der zum Abbruch verwendeten Ausgangsverbindung entstehen entweder vollständig NCO-terminierte oder vollständig OH-terminierte Moleküle.

In einer anderen Ausführungsform kann man beispielsweise auch ein AB₂-Monomer aus einem Mol Glycerin und 2 mol TDI herstellen. Bei tiefer Temperatur reagieren vorzugsweise primäre Alkoholgruppen sowie die Isocyanat-Gruppe in 4-Stellung, und es wird ein Addukt gebildet, welches eine OH-Gruppe und zwei Isocyanat-Gruppen aufweist und das wie geschildert bei höheren Temperaturen zu einem hyperverzweigten Polyurethan umgesetzt werden kann. Es entsteht zunächst ein hyperverzweigtes Polyurethan, welches eine freie OH-Gruppe sowie eine vom Polymerisationsgrad abhängige mittlere Anzahl von NCO-Gruppen aufweist.

Die Anzahl der NCO-Gruppen pro Molekül ist von 2 bis 100, bevorzugt von 3 bis 20 und besonders bevorzugt bis 10.

Das Molekulargewicht Mₙ der für die vorliegende Erfindung zu verwendenden hyperverzweigten Polyurethane (a) kann beispielsweise 500 bis maximal 50.000 g/mol betragen, bevorzugt maximal 15.000 g/mol und besonders bevorzugt maximal 10.000 g/mol und ganz besonders bevorzugt bis 5.000 g/mol.

Die Herstellung von hyperverzweigten Polyurethanen (a) kann man prinzipiell ohne Lösungsmittel, bevorzugt aber in Lösung durchführen. Als Lösungsmittel prinzipiell geeignet sind alle bei der Umsetzungstemperatur flüssigen und gegenüber den Monomeren und Polymeren inerten Verbindungen.

Andere Beispiele für hyperverzweigte Polyurethane (a) sind durch weitere Synthesevarianten zugänglich. Beispielhaft seien an dieser Stelle AB₃-Monomere genannt. AB₃-Monomere lassen sich beispielsweise durch Reaktion von Diisocyanaten mit Verbindungen mit 4 gegenüber Isocyanat zur Reaktion fähigen Gruppen erhalten. Beispielhaft sei die Umsetzung von Toluylendiisocyanat mit Tris(hydroxymethyl)-aminomethan genannt.

Zum Abbruch der Herstellung von hyperverzweigten Polyurethanen (a) kann man polyfunktionelle Verbindungen einsetzen, die mit den jeweiligen A-Gruppen reagieren können. Auf diese Art und Weise können mehrere kleine hyperverzweigte Moleküle zu einem großen hyperverzweigten Polyurethan (a) verknüpft werden.

Hyperverzweigte Polyurethane (a) mit kettenverlängerten Ästen lassen sich beispielsweise erhalten, indem zur Polymerisationsreaktion neben ABₓ-Monomeren zusätzlich im molaren Verhältnis 1:1 ein Diisocyanat und eine Verbindung, die zwei mit Isocyanatgruppen zur Reaktion fähige Gruppen aufweist, eingesetzt werden. Diese zusätzlichen AA- bzw. BB-Verbindungen können auch noch über weitere funktionelle Gruppen verfügen, die bei den Reaktionsbedingungen aber nicht reaktiv gegenüber den A- oder B-Gruppen sein dürfen. Auf diese Art und Weise können weitere Funktionalitäten in das hyperverzweigte Polymer eingebracht werden.

Weitere Synthesevarianten für hyperverzweigte Polyurethane (a) finden sich in WO 02/36695, DE-A 100 13 187 und DE-A 100 30 869.

Zur Herstellung von hyperverzweigtem Polyurethan (a) kann man einen oder mehrere Katalysatoren einsetzen. Als Katalysatoren kommen prinzipiell alle in der Polyurethanchemie üblicherweise verwendeten Katalysatoren in Betracht.

Üblicherweise in der Polyurethanchemie verwendete Katalysatoren sind beispielsweise organische Amine, insbesondere tertiäre aliphatische, cycloaliphatische oder aromatische Amine, und Lewis-saure organische Metallverbindungen.

Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-derivate von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, 35, 19 ff. beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut-und Cobaltkatalysatoren sowie Cäsiumsalze können als hydrophobe Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN-, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁ H₂ₙ₋₂O₄)²⁻, wobei n für ganze Zahlen 1 bis 20 steht.

Bevorzugt sind dabei Cäsiumcarboxylate, bei denen das Anion den Formeln (CₙH₂ₙ₋₁O₂) sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für ganze Zahlen 1 bis 20 steht. Hierbei sind insbesondere zu erwähnen Formiat, Acetat, Propionat, Hexanoat und 2-Ethylhexanoat.

Als übliche organische Amine seien beispielhaft genannt: Triethylamin, 1,4-Diazabicyclo-[2,2,2]-octan, Tributylamin, Dimethylbenzylamin, N,N,N',N'-Tetramethylethylendiamin, N,N,N',N'-Tetramethylbutan-1,4-diamin, N,N,N',N'-Tetramethylhexan-1,6-diamin, Dimethylcyclohexylamin, Dimethyldodecylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)ether, N-Ethylmorpholin, N-Methylmorpholin, N-Cyclohexylmorpholin, 2-Dimethylaminoethoxyethanol, Dimethylethanolamin, Tetramethylhexamethylendiamin, Dimethylamino-N-methylethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, Tris-(N,N-dimethylaminopropyl)-s-hexahydrotriazin, Imidazole wie 1,2-Dimethylimidazol, 4-Chlor-2,5-dimethyl-1-(N-methylaminoethyl)imidazol, 2-Aminopropyl-4,5-dimethoxy-1-methylimidazol, 1-Aminopropyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)-midazol und/oder 1-(3-Aminopropyl)-2-methylimidazol.

Bevorzugte organische Amine sind Trialkylamine, mit unabhängig voneinander zwei C₁-bis C₄-Alkylresten und einem Alkyl- oder Cycloalkylrest mit 4 bis 20 Kohlenstoffatomen, beispielsweise Dimethyl-C₄-C₁₅-Alkylamin wie Dimethyldodecylamin oder Dimethyl-C₃-C₈-Cycloalkylamin. Ebenfalls bevorzugte organische Amine sind bicyclische Amine, die gegebenenfalls ein weiteres Heteroatom wie Sauerstoff oder Stickstoff enthalten können, wie beispielsweise 1,4-Diazabicyclo-[2,2,2]-octan.

Selbstverständlich können auch Gemische aus zwei oder mehreren der vorstehend genannten Verbindungen als Katalysatoren eingesetzt werden.

Besonders bevorzugt verwendet man hydrophobe Katalysatoren, gewählt aus den vorstehend genannten Verbindungen.

Katalysator setzt man vorzugsweise in einer Menge von 0,0001 bis 10 Gew.-%, besonders bevorzugt in einer Menge von 0,001 bis 5 Gew.-% ein, bezogen auf die Gesamtmenge an Isocyanat und Verbindung mit Isocyanat-reaktiven Gruppen.

Man kann - je nach Beschaffenheit des Katalysators oder der Katalysatoren - den oder die Katalysatoren in fester oder flüssiger Form oder gelöst zusetzen. Geeignete Lösemittel sind mit Wasser nichtmischbare Lösungsmittel wie aromatische oder aliphatische Kohlenwasserstoffe wie beispielsweise Toluol, Ethylacetat, Hexan und Cyclohexan sowie Carbonsäureester wie beispielsweise Ethylacetat. Bevorzugt setzt man den oder die Katalysatoren in fester oder flüssiger Form zu.

Hyperverzweigte Polyurethane (a) im Sinne der vorliegenden Erfindung weisen vorteilhaft pro Molekül im Mittel mindestens eine Gruppe auf, die in wässriger Lösung ionisierbar ist, oder sie sind durch Einbau von nicht-ionischen hydrophilen Endgruppen oder Molekülbausteine gekennzeichnet. Als ionisierbare Gruppen seien beispielsweise COOH-Gruppen und SO₃H-Gruppen sowie deren Alkali- und Ammoniumsalze genannt, weiterhin quaternisierte Aminogruppen. Als nicht-ionische hydrophile Endgruppen oder Molekülbausteine seien beispielhaft genannt:
-(OCH₂CH₂)_{z}OR⁶, wobei z eine ganze Zahl im Bereich von 2 bis 100 ist, bevorzugt 5 bis 50,
R⁶ steht für C₁-C₄-Alkyl, beispielsweise tert.-Butyl, sec.-Butyl, iso-Butyl, n-Butyl, iso-Propyl, n-Propyl, ethyl und insbesondere Methyl;
oligomeres und polymeres Ethylenglykol der Formel HO-(CH₂CH₂O)_{z}H, wobei z wie vorstehend definiert ist.

Besonders vorteilhaft ist die Verwendung solcher hyperverzweigter Polyurethane (a), deren funktionellen Gruppen hydrophiliert oder umfunktionalisiert worden sind. Auf diese Art und Weise werden der erfindungsgemäßen Anwendung von hyperverzweigten Polyurethanen (a) zur Herstellung von wasserlöslichen strahlungshärtbaren Produkten (A) besonders angepasste hyperverzweigte Polyurethane (a) zugänglich, indem man pigmentaffine Gruppen einführt. Zur Umfunktionalisierung eignen sich aufgrund ihrer Reaktivität ganz besonders solche hyperverzweigten Polyurethane (a), die Isocyanat-Gruppen aufweisen. Selbstverständlich können auch OH- oder NH₂-terminierte Polyurethane mittels geeigneter Reaktionspartner umfunktionalisiert werden.

Beispiele für pigmentaffine Gruppen, die mittels geeigneter Reaktionspartner eingeführt werden, sind -COOH, -COOR⁴, -CONHR⁴, -CONH₂,-OH, -SH, -NH₂, -NHR⁴, -N(R⁴)₂, -SO₃H, -SO₃R⁴, -*N*(Phthalimid), -NHCOOR⁴, -NHCONH₂, -NHCONHR⁴ oder-CN. Bei den Resten R⁴ der vorstehend genannten Gruppen handelt es sich um unverzweigte oder verzweigte Alkylreste, um Aralkylreste oder um Arylreste, die weiter substituiert sein können; beispielsweise um C₁-C₄₀-Alkylreste oder um C₆-C₁₄-Arylreste. Beispielhaft erwähnt seien die folgenden Reste:
C₁-C₄₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl oder n-Eicosyl, besonders bevorzugt ist Methyl;
C₆-C₁₄-Aryl, beispielsweise Phenyl, α-Naphthyl, β-Naphthyl, 1-Anthracenyl, 2-Anthracenyl oder 9-Anthracenyl,
C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl.

Gruppen, die über ausreichend acide H-Atome verfügen, kann man durch Behandlung mit Basen in die entsprechenden Salze überführen. Gut geeignete Basen sind beispielsweise Hydroxide und Hydrogencarbonate von Alkalimetallen oder Erdalkalimetallen oder die Carbonate von Alkalimetallen. Weitere gut geeignete Basen sind flüchtige Amine, d.h. Amine mit einem Siedepunkt bei Atmosphärendruck von bis 180°C, wie beispielsweise Ammoniak, Methylamin, Dimethylamin, Trimethylamin, Ethylamin, Diethylamin, Triethylamin, Ethanolamin oder N-Methyldiethanolamin. Analog lassen sich basische Gruppen mit Säuren wie beispielsweise α-Hydroxycarbonsäuren oder α-Aminosäuren oder auch α-Hydroxysulfonsäuren in die entsprechenden Salze überführen. Dadurch kann man wasserlösliche strahlungshärtbare Produkte (A) erhalten.

Säuregruppen lassen sich beispielsweise durch Umsetzung mit Hydroxycarbonsäuren, Mercaptocarbonsäuren, Hydroxysulfonsäuren oder Aminosäuren in hyperverzweigte Polyurethane (a) einführen. Als Beispiele geeigneter Reaktionspartner seien Hydroxyessigsäure, Hydroxypivalinsäure, 4-Hydroxybenzoesäure, 12-Hydroxydodecansäure, 2-Hydroxyethansulfonsäure, Mercaptoessigsäure, Dimethylolpropionsäure, Dimethylolbuttersäure, Glycin, β-Alanin oder Taurin genannt.

In einer Ausführungsform der vorliegenden Erfindung kann man bei der Herstellung von hyperverzweigtem Polyurethan (a) bis zu 10 mol-%, bezogen auf (a), Verbindungen zusetzen, die nur eine Isocyanat-reaktive Gruppe aufweisen, beispielsweise Monoalkohole, primäre oder sekundäre Monoamine oder Mercaptane.

In einer bevorzugten Ausführungsform der vorliegenden Erfindung handelt es sich bei mindestens einem hyperverzweigten Polyurethan (a) um solche mit mindestens einer NCO-Gruppe pro Molekül, bevorzugt mit mindestens 2 NCO-Gruppen pro Molekül.

In einer bevorzugten Ausführungsform der vorliegenden Erfindung handelt es sich bei wasserlöslichen strahlungshärtbaren Produkten (A) um wasserlösliche strahlungshärtbare Produkte (A) mit mindestens einer COOH-Gruppe pro Molekül (Zahlenmittel). Bevorzugt handelt es sich bei mindestens wasserlöslichen strahlungshärtbaren Produkten (A) um eines, bei dem man die COOH-Gruppe einführt, indem man gegen Ende oder nach der Synthese von hyperverzweigtem Polyurethan (a) Hydroxyessigsäure und besonders bevorzugt β-Alanin zusetzt, und zwar insbesondere nach Ablauf einer gewissen Zeit. Durch die Umsetzung der Hydroxylgruppe der Hydroxyessigsäure bzw. insbesondere der Aminogruppe des β-Alanin mit einer NCO-Gruppe lassen sich COOH-Gruppen in besonders gut geeignete wasserlösliche strahlungshärtbare Produkte (A) einführen.

Vorzugsweise befinden sich COOH-Gruppen am Ende eines Astes des betreffenden hyperverzweigten Polyurethans (a).

"Pro Molekül" bedeutet im Zusammenhang mit der vorliegenden Erfindung bei nur unvollständig oder gar nicht ablaufender Reaktion von (a) mit (b): pro Molekül eingesetztes hyperverzweigtes Polyurethan (a).

Für die erfindungsgemäße Verwendung kann man gemäß Weg 1 mindestens ein hyperverzweigtes Polyurethan (a) mit mindestens einer Verbindung der allgemeinen Formel II(b) vermischen und dabei gegebenenfalls ihre Umsetzung bewirken.

Dabei kann es zur Reaktion und somit Umsetzung von hyperverzweigtem Polyurethan (a) mit mindestens einer Verbindung der allgemeinen Formel II(b) kommen, die bezogen auf (b) quantitativ oder auch partiell ablaufen kann.

In einer Ausführungsform der vorliegenden Erfindung vermischt man (a) und (b) in einem Gewichtsverhältnis von 3 : 1 bis 10.000: 1, bevorzugt von 5 : 1 bis 5.000 : 1, ganz besonders bevorzugt in einem Gewichtsverhältnis von 10 : 1 bis 1.000 : 1.

In erfindungsgemäßem wasserlöslichen strahlungshärtbaren Produkt (A) kann mindestens eine Verbindung mit mindestens einer ethylenischen Doppelbindung pro Molekül (b) unter hyperverzweigtes Polyurethan (a) untergemischt sein. Es kann sich bei Verbindung mit mindestens einer ethylenischen Doppelbindung pro Molekül (b) auch um kovalent an hyperverzweigtes Polyurethan (a) angebundene Verbindung mit mindestens einer ethylenischen Doppelbindung pro Molekül handeln. Wünscht man Verbindung mit mindestens einer ethylenischen Doppelbindung pro Molekül (b) kovalent an hyperverzweigtes Polyurethan (a) zu verknüpfen, so beziehen sich die Mengenverhältnisse von hyperverzweigtem Polyurethan (a) und von Verbindung mit mindestens einer ethylenischen Doppelbindung pro Molekül (b) jeweils auf Ausgangsmaterial, d.h. auf hyperverzweigtes Polyurethan (a) und Verbindung mit mindestens einer ethylenischen Doppelbindung pro Molekül (b) vor der kovalenten Verknüpfung.

In der Ausführungsform der vorliegenden Erfindung setzt man mindestens eine Verbindung der allgemeinen Formel II(b) zu Beginn oder während der Synthese von hyperverzweigtem Polyurethan (a) zu (Weg 2) und synthetisiert so hyperverzweigtes Polyurethan (a) in Gegenwart von mindestens einer Verbindung der allgemeinen Formel II(b).

Das Vermischen von (a) und (b) kann man in beliebigen Gefäßen durchführen. Man kann zum Zweck des Vermischens ein oder mehrere organische Lösungsmittel und/oder Wasser zugeben. Geeignete Methoden sind Verrühren, Schütteln, aber auch Dispergieren in Dispergierapparaten wie beispielsweise Kugelmühlen und insbesondere Rührwerkskugelmühlen oder Schüttelapparaturen, beispielsweise der Firma Skandex.

Dazu kann man mindestens einer Verbindung der allgemeinen Formel II(b) zu Beginn oder während der oben beschriebenen Synthese von hyperverzweigtem Polyurethan (a) zugeben.

Dabei kann es zu einer Reaktion und somit Umsetzung von sich bildendem hyperverzweigtem Polyurethan (a) mit Verbindung der allgemeinen Formel II(b) kommen, die quantitativ (bezogen auf Verbindung mit mindestens einer ethylenischen Doppelbindung pro Molekül) oder auch partiell ablaufen kann.

In einer Ausführungsform der vorliegenden Erfindung setzt man während der Synthese von (a) 0,01 bis 25 Gew.-% (b) zu, bevorzugt 0,1 bis 15 Gew.-% und besonders bevorzugt 0,2 bis 10 Gew.-%, bezogen auf (a), wobei man von der Annahme ausgeht, dass die Bildung von hyperverzweigtem Polyurethan (a) quantitativ verläuft.

Man kann (b) in einer oder in mehreren Portionen zusetzen.

Man kann in einer Ausführungsform der vorliegenden Erfindung Weg 1 und Weg 2 kombinieren, d.h. beispielsweise zunächst hyperverzweigtes Polyurethan (a) in Gegenwart mindestens einer Verbindung mit ethylenischen Doppelbindung pro Molekül (b) synthetisieren und anschließend mit mindestens einer weiteren Verbindung mit mindestens einer ethylenischen Doppelbindung pro Molekül (b), die gleich oder verschieden von bei der Synthese von (a) anwesender Verbindung mit mindestens einer ethylenischen Doppelbindung pro Molekül ist, vermischen.

In einer bevorzugten Ausführungsform der vorliegenden Erfindung setzt man Verbindung der allgemeinen Formel II(b) zu Beginn oder während der Synthese von hyperverzweigtem Polyurethan (a) zu.

Unter ethylenischen Doppelbindungen sind im Rahmen der vorliegenden Erfindung olefinische Doppelbindungen, d.h. C-C-Doppelbindungen zu verstehen, die einen oder mehrere Substituenten tragen können.

Besonders bevorzugt handelt es sich bei Verbindungen mit mindestens einer ethylenisch ungesättigten Doppelbindung pro Molekül (b) um Derivate von α,β-ungesättigten Carbonsäuren, insbesondere um Derivate der (Meth)acrylsäure oder der Crotonsäure.

In der Ausführungsform der vorliegenden Erfindung wählt man mindestens eine Verbindung mit ethylenischen Doppelbindungen pro Molekül (b) aus Verbindungen der allgemeinen Formel II 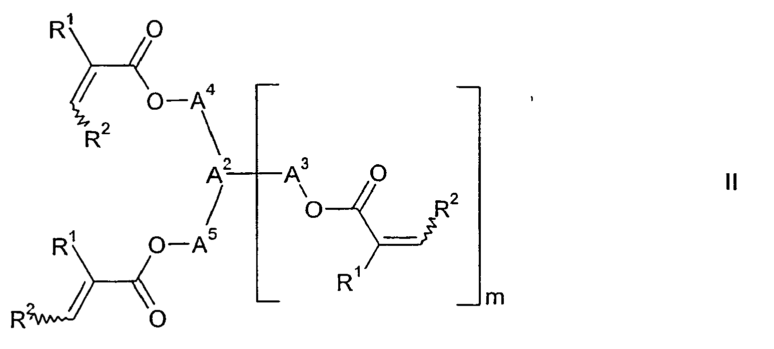 in denen die Variablen wie folgt definiert sind:
- R¹, R²: verschieden oder vorzugsweise gleich und wie oben stehend definiert
- m: eine ganze Zahl von 0 bis 2, bevorzugt 1;
- A²: CH₂ oder -CH₂-CH₂- oder R⁵-CH oder para-C₆H₄ für den Fall, dass m = 0, CH, C-OH, C-O-C(O)-CH=CH₂, C-O-CO-C(CH₃)=CH₂, R⁵-C oder 1,3,5-C₆H₃ für den Fall, dass m = 1, und Kohlenstoff für den Fall, dass m = 2;
- R⁵: gewählt aus C₁-C₄-Alkyl, wie beispielsweise n-C₄H₉, n-C₃H₇, iso-C₃H₇ und vorzugsweise C₂H₅ und CH₃, oder Phenyl,
- A³, A⁴, A⁵: gleich oder verschieden und gewählt aus
C₁-C₂₀-Alkylen, wie beispielsweise -CH₂-, -CH(CH₃)-, -CH(C₂H₅)-,-CH(C₆H₅)-, -(CH₂)₂-, -(CH₂)₃-, -(CH₂)₄-, -(CH₂)₅-, -(CH₂)₆-, -(CH₂)₇-, -(CH₂)₈-, -(CH₂)₉-, -(CH₂)₁₀-, -CH(CH₃)-(CH₂)₂-CH(CH₃)-;
cis- oder *trans*-C₄-C₁₀-Cycloalkylen, wie beispielsweise cis-1,3-Cyclopentyliden, *trans*-1,3-Cyclopentyliden *cis*-1,4-Cyclohexyliden, *trans-*1,4-Cyclohexyliden;
C₁-C₂₀-Alkylen, in denen von einem bis zu sieben jeweils nicht benachbarte C-Atome durch Sauerstoff ersetzt sind, wie beispielsweise -CH₂-O-CH₂-, -(CH₂)₂-O-CH₂-, -(CH₂)₂-O-(CH₂)₂-, -[(CH₂)₂-O]₂-(CH₂)₂-, -[(CH₂)₂-O]₃-(CH₂)₂;
C₁-C₂₀-Alkylen, substituiert mit bis zu 4 Hydroxylgruppen, wobei in C₁-C₂₀-Alkylen von einem bis zu sieben jeweils nicht benachbarte C-Atome durch Sauerstoff ersetzt sind, wie beispielsweise -CH₂-O-CH₂-CH(OH)-CH₂-, -CH₂-O-[CH₂-CH(OH)-CH₂]₂-, -CH₂-O-[CH₂-CH(OH)-CH₂]₃-;
C₆-C₁₄-Arylen, wie beispielsweise para-C₆H₄.

Besonders bevorzugte Beispiele für Verbindungen der allgemeinen Formel II sind Trimethylolpropantriacrylat und das Triacrylat von dreifach ethoxyliertem Trimethylolpropan.

Ein weiterer sehr gut geeigneter Vertreter für Moleküle mit mindestens zwei terminalen ethylenisch ungesättigten Doppelbindungen pro Molekül ist Ethylenglycoldiacrylat.

Weitere sehr gut geeignete Vertreter für Moleküle mit mindestens zwei terminalen ethylenisch ungesättigten Doppelbindungen pro Molekül sind partiell oder erschöpfend (meth)acrylierte Polyole wie beispielsweise partiell oder erschöpfend (meth)acryliertes dimeres Trimethylolpropan, partiell oder erschöpfend (meth)acryliertes dimeres Trimethylolethan, partiell oder erschöpfend (meth)acrylierter dimerer Pentaerythrit.

Man kann erfindungsgemäßen wasserlöslichen strahlungshärtbaren Produkten (A) mindestens einen Radikalfänger zusetzen, beispielsweise sterisch gehinderte Amine wie beispielsweise sogenannte HALS oder stabilisierte Nitroxylradikale wie 4-Hydroxy-TEMPO (Formel III)

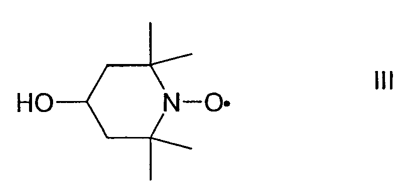

Vorzugsweise kann man bis zu 1 Gew.-%, bezogen auf (a), an Radikalfänger zusetzen, besonders bevorzugt bis zu 0,5 Gew.-%.

Erfindungsgemäße wasserlösliche strahlungshärtbare Produkte (A) lassen sich durch aktinische Strahlung härten, beispielsweise durch aktinische Strahlung mit einem Wellenlängenbereich von 200 nm bis 450 nm. Geeignet ist beispielsweise aktinische Strahlung mit einer Energie im Bereich von 70 mJ/cm² bis 2000 mJ/cm². Aktinische Strahlung kann man zweckmäßig beispielsweise kontinuierlich oder in Form von Blitzen einbringen.

Erfindungsgemäße wasserlösliche strahlungshärtbare Produkte (A) sind besonders gut geeignet zur Herstellung von Tinten für das Ink-Jet-Verfahren, insbesondere von wässrigen Tinten für das Ink-Jet-Verfahren. Ganz besonders gut lassen sich erfindungsgemäße wasserlösliche strahlungshärtbare Produkte (A) verwenden zur Herstellung von Pigment-haltigen wässrigen Tinten für das Ink-Jet-Verfahren.

Im Rahmen der vorliegenden Erfindung werden Tinten für das Ink-Jet-Verfahren auch als Ink-Jet-Tinten oder kurz als Tinten bezeichnet.

Ein weiterer Gegenstand der vorliegenden Erfindung sind Tinten für das Ink-Jet-Verfahren, insbesondere wässrige Tinten für das Ink-Jet-Verfahren, enthaltend
(A) mindestens ein wasserlösliches strahlungshärtbares Produkt, erhältlich durch
   Vermischen und gegebenenfalls Umsetzung von
   mindestens einem hyperverzweigten Polyurethan (a) mit
   mindestens einer Verbindung den allgemeinen Formel II(b)
   oder durch Synthese von
   mindestens einem hyperverzweigten Polyurethan (a)
   in Gegenwart von mindestens einer Verbindungen den allgemeinen Formel II(b)
(B) mindestens ein Pigment.

Hyperverzweigte Polyurethane (a) und Verbindungen den allgemeinen Formel II(b) sind vorstehend beschrieben.

Erfindungsgemäße wässrige Tinten für das Ink-Jet-Verfahren enthalten weiterhin mindestens ein Pigment (B). Unter Pigmenten (B) sind im Rahmen der vorliegenden Erfindung praktisch nicht lösliche, dispergierte feinteilige, organische oder anorganische Farbmittel gemäß der Definition in DIN 55944 zu verstehen. Bevorzugt geht das erfindungsgemäße Verfahren von organischen Pigmenten aus, wobei Ruß mit umfasst ist. Im Folgenden sind Beispiele für besonders gut geeignete Pigmente genannt.

### Organische Pigmente:

- Monoazopigmente:: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente:: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
- Anthanthronpigmente:: C.I. Pigment Red 168 (C.I. Vat Orange 3);
- Anthrachinonpigmente:: C.I. Pigment Yellow 147 und 177; C.I. Pigment Violet 31;
- Anthrachinonpigmente:: C.I. Pigment Yellow 147 und 177; C.I. Pigment Violet 31;
- Anthrapyrimidinpigmente:: C.I. Pigment Yellow 108 (C.I. Vat Yellow 20);
- Chinacridonpigmente:: C.I. Pigment Red 122, 202 und 206; C.I. Pigment Violet 19;
- Chinophthalonpigmente:: C.I. Pigment Yellow 138;
- Dioxazinpigmente:: C.I. Pigment Violet 23 und 37;
- Flavanthronpigmente:: C.I. Pigment Yellow 24 (C.I. Vat Yellow 1);
- Indanthronpigmente:: C.I. Pigment Blue 60 (C.I. Vat Blue 4) und 64 (C.I. Vat Blue 6);
- Isoindolinpigmente:: C.I. Pigment Orange 69; C.I. Pigment Red 260; C.I. Pigment Yellow 139 und 185;
- Isoindolinonpigmente:: C.I. Pigment Orange 61; C.I. Pigment Red 257 und 260; C.I. Pigment Yellow 109, 110, 173 und 185;
- Isoviolanthronpigmente:: C.I. Pigment Violet 31 (C.I. Vat Violet 1);
- Metallkomplexpigmente:: C.I. Pigment Yellow 117, 150 und 153; C.I. Pigment Green 8;
- Perinonpigmente:: C.I. Pigment Orange 43 (C.I. Vat Orange 7); C.I. Pigment Red 194 (C.I. Vat Red 15);
- Perylenpigmente:: C.I. Pigment Black 31 und 32; C.I. Pigment Red 123, 149, 178, 179 (C.I. Vat Red 23), 190 (C.I. Vat Red 29) und 224; C.I. Pigment Violet 29;
- Phthalocyaninpigmente:: C.I. Pigment Blue 15, 15:1, 15:2, 15:3, 15:4, 15:6 und 16;
C.I. Pigment Green 7 und 36;
- Pyranthronpigmente:: C.I. Pigment Orange 51; C.I. Pigment Red 216 (C.I. Vat Orange 4);
- Thioindigopigmente:: C.I. Pigment Red 88 und 181 (C.I. Vat Red 1); C.I. Pigment Violet 38 (C.I. Vat Violet 3);
- Triarylcarboniumpigmente:: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
C.I. Pigment Yellow 101 (Aldazingelb);
C.I. Pigment Brown 22.

### Anorganische Pigmente:

- Weißpigmente:: Titandioxid (C.I. Pigment White 6), Zinkweiß, Farbenzinkoxid; Zinksulfid, Lithopone; Bleiweiß;
- Schwarzpigmente:: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente:: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot;

Eisenoxidbraun, Mischbraun, Spinell- und Korundphasen (C.I. Pigment Brown 24, 29 und 31), Chromorange;

Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente (B) sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße zu nennen.

Beispiele für besonders bevorzugte Pigmente (B) sind im einzelnen: Ruß, C.I. Pigment Yellow 138, C.I. Pigment Red 122 und 146, C.I. Pigment Violet 19, C.I. Pigment Blue 15:3 und 15:4, C.I. Pigment Black 7, C.I. Pigment Orange 5, 38 und 43 und C.I. Pigment Green 7.

Zur Herstellung von erfindungsgemäßen Tinten für das Ink-Jet-Verfahren mischt man Pigment (B) zu erfindungsgemäßem wasserlöslichem strahlungshärtbarem Produkt zu.

Vorzugsweise weist erfindungsgemäßes wasserlösliches strahlungshärtbares Produkt (A) zu dem Zeitpunkt, zu dem man Pigment (B) zusetzt, weniger als 0,1 Gew.-% endständige NCO-Gruppen mehr auf, besonders bevorzugt keine NCO-Gruppen, die durch beispielsweise Titration nachweisbar wären.

In einer bevorzugten Ausführungsform der vorliegenden Erfindung enthalten erfindungsgemäße Tinten für das Ink-Jet-Verfahren mindestens einen Photoinitiator (C).

Geeignete Photoinitiatoren (C) können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 0 007 508, EP-A 0 057 474, DE-A 196 18 720, EP-A 0 495 751 und EP-A 0 615 980 beschrieben sind, beispielsweise 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, Hydroxyacetophenon, Phenylglyoxylsäure und ihre Derivate oder Gemische der vorstehend genannten Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert-*Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-isopropylthioxanthon, 2,4-Dichlorthioxanthon, Benzoin, Benzoin-*iso*-butylether, Chloroxanthenon, Benzoin-tetrahydropyranylether, Benzoin-methylether, Benzoin-ethylether, Benzoin-butylether, Benzoin-iso-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugte Photoinititatoren (C) sind beispielsweise solche Photoinitiatoren, die bei Aktivierung zerfallen, sogenannte α-Zerfaller wie beispielsweise Photoinitiatoren vom Benzildialkylketal-Typ wie z.B. Benzildimethylketal. Weitere Beispiele für geeignete α-Zerfaller sind Derivate von Benzoin, Isobutylbenzoinether, Phosphinoxide, insbesondere Mono- und Bisacylphosphinoxide, z.B. Benzoyldiphenylphosphinoxid, 2,4,6-Trimethylbenzoyldiphenylphosphinoxid, α-Hydroxyalkylacetophenone wie z.B. 2-Hydroxy-2-methylphenylpropanon (C.1), 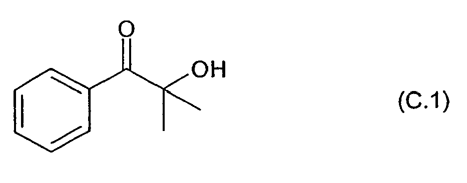 2-Hydroxy-1-[-4-(2-hydroxyethoxy)phenyl]-2-methyl-1-propanon (C.2) 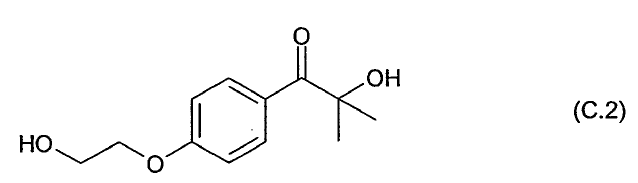 Phosphinsulfide und Ethyl-4-dimethylaminobenzoat sowie

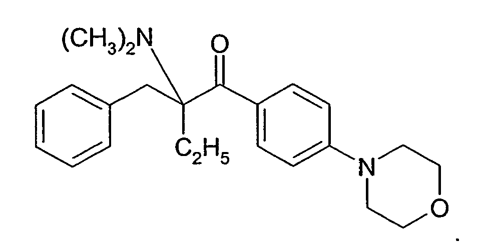

Weitere Beispiele für bevorzugte Photoinitiatoren (C) sind Wasserstoff-abstrahierende Photoinitiatoren, beispielsweise vom Typ der gegebenenfalls substituierten Acetophenone, Anthrachinone, Thioxanthone, Benzoesäureester oder der gegebenenfalls substituierten Benzophenone. Besonders bevorzugte Beispiele sind Isopropylthioxanthon, Benzophenon, Phenylbenzylketon, 4-Methylbenzophenon, halogenmethylierte Benzophenone, Anthron, Michlers Keton (4,4'-bis-N,N-dimethylaminobenzophenon), 4-Chlorbenzophenon, 4,4'-Dichlorbenzophenon, Anthrachinon.

Photoinitiator (C) kann frei in erfindungsgemäßer Tinte für das Ink-Jet-Verfahren vorliegen.

Die Wirksamkeit von Photoinitiatoren (C) in erfindungsgemäßen wasserlöslichen strahlungshärtbaren Produkten (A) bzw. erfindungsgemäßen Tinten für das Ink-Jet-Verfahren kann man, wenn es gewünscht wird, durch die Zugabe von mindestens Synergisten, beispielsweise von mindestens einem Amin, insbesondere von mindestens einem tertiärem Amin erhöhen. Geeignete Amine sind beispielsweise Triethylamin, N,N-Dimethylethanolamin, N-Methylethanolamin, Triethanolamin, Aminoacrylate wie beispielsweise aminmodifizierte Polyetheracrylate. Wenn man Amine wie beispielsweise tertiäre Amine als Katalysator bei der Synthese von hyperverzweigtem Polyurethan (a) eingesetzt und nach der Synthese nicht abgetrennt hat, so kann auch als Katalysator verwendetes tertiäres Amin als Synergist wirken. Weiterhin kann zur Neutralisation von sauren Gruppen wie beispielsweise COOH-Gruppen oder SO₃H-Gruppen eingesetztes tertiäres Amin als Synergist wirken. Man kann bis zur doppelten molaren Menge Synergist zusetzen, bezogen auf eingesetzten Photoinitiator (C).

In einer Ausführungsform der vorliegenden Erfindung enthalten erfindungsgemäße Tinten
1 bis 20 Gew.-%, bevorzugt 1,5 bis 15 Gew.-% (A),
0,01 bis 20 Gew.-%, bevorzugt 1 bis 10 Gew.-% (B)
0 bis 10 Gew.-%, bevorzugt 0,1 bis 6 Gew.-% (C),
wobei Angaben in Gew.-% jeweils bezogen auf das Gesamtgewicht der betreffenden erfindungsgemäßen Tinte sind.

Erfindungsgemäße Tinten für das Ink-Jet-Verfahren können weiterhin mindestens einen Zuschlagstoff (D) enthalten.

Als Zuschlagstoff (D) können erfindungsgemäße Tinten für das Ink-Jet-Verfahren ein oder mehrere organische Lösungsmittel enthalten. Niedermolekulares Polytetrahydrofuran (Poly-THF) ist ein bevorzugter Zuschlagstoff (D), es kann allein oder vorzugsweise im Gemisch mit einem oder mehreren schwer verdampfbaren, in Wasser löslichen oder mit Wasser mischbaren organischen Lösungsmitteln eingesetzt werden.

Bevorzugt verwendetes niedermolekulares Polytetrahydrofuran hat üblicherweise ein mittleres Molekulargewicht Mₙ von 150 bis 500 g/mol, bevorzugt von 200 bis 300 g/mol und besonders bevorzugt von etwa 250 g/mol (entsprechend einer Molekulargewichtsverteilung).

Polytetrahydrofuran kann auf bekannte Weise über kationische Polymerisation von Tetrahydrofuran hergestellt werden. Dabei entstehen lineare Polytetramethylenether.

Wenn Polytetrahydrofuran im Gemisch mit weiteren organischen Lösungsmitteln als Zuschlagstoff (D) verwendet wird, werden hierfür im Allgemeinen schwer verdampfbare (d.h. in der Regel bei Normaldruck einen Siedepunkt > 100°C aufweisende) und damit eine wasserrückhaltende Wirkung besitzende organische Lösungsmittel eingesetzt, die in Wasser löslich oder mit Wasser mischbar sind.

Als Lösungsmittel eignen sich mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2- und 1,3-Propylenglykol, Glycerin, Erythrit, Pentaerythrit, Pentite wie Arabit, Adonit und Xylit und Hexite wie Sorbit, Mannit und Dulcit.

Weitere geeignete Lösungsmittel sind Polyethylen- und Polypropylenglykole, worunter auch die niederen Polymere (Di-, Tri- und Tetramere) verstanden werden sollen, und deren Mono- (vor allem C₁-C₆-, insbesondere C₁-C₄-)alkylether. Bevorzugt sind Polyethylen- und Polypropylenglykole mit mittleren Molekulargewichten von 100 bis 1500 g/mol, insbesondere von 200 bis 800 g/mol, vor allem von 300 bis 500 g/mol. Als Beispiele seien Di-, Tri- und Tetraethylenglykol, Diethylenglykolmonomethyl-, -ethyl-, -propyl- und -butylether, Triethylenglykolmonomethyl-, -ethyl-, -propyl- und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

Weiterhin als Lösungsmittel geeignet sind Pyrrolidon und N-Alkylpyrrolidone, deren Alkylkette vorzugsweise 1 bis 4, vor allem 1 bis 2, Kohlenstoffatome enthält. Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel sind 1,2- und 1,3-Propylenglykol, Glycerin, Sorbit, Diethylenglykol, Polyethylenglykol (Mₙ 300 bis 500 g/mol), Diethylenglykolmonobutylether, Triethylenglykolmonobutylether, Pyrrolidon, N-Methylpyrrolidon und N-(2-Hydroxyethyl)pyrrolidon.

Polytetrahydrofuran kann auch mit einem oder mehreren (z.B. zwei, drei oder vier) der oben aufgeführten Lösungsmitteln gemischt werden.

In einer Ausführungsform der vorliegenden Erfindung können erfindungsgemäße Tinten für das Ink-Jet-Verfahren 0,1 bis 80 Gew.-%, bevorzugt 5 bis 60 Gew.-%, besonders bevorzugt 10 bis 50 Gew.-%, und ganz besonders bevorzugt 10 bis 30 Gew.%, nicht-wässrige Lösungsmittel enthalten.

Nicht-wässrige Lösungsmittel als Zuschlagstoffe (D), insbesondere auch die genannten besonders bevorzugten Lösungsmittelkombinationen, können vorteilhaft durch Harnstoff (in der Regel 0,5 bis 3 Gew.-%, bezogen auf das Gewicht der Farbmittelzubereitung) ergänzt werden, der die wasserrückhaltende Wirkung des Lösungsmittelgemisches noch verstärkt.

Erfindungsgemäße Tinten für das Ink-Jet-Verfahren können weitere Zuschlagstoffe (D), wie sie insbesondere für wässrige Ink-Jet-Tinten und in der Druck- und Lackindustrie üblich sind, enthalten. Genannt seien z.B. Konservierungsmittel wie beispielsweise 1,2-Benzisothiazolin-3-on (kommerziell erhältlich als Proxel-Marken der Fa. Avecia Lim.) und dessen Alkalimetallsalze, Glutardialdehyd und/oder Tetramethylolacetylendiharnstoff, Protectole®, Antioxidantien, Entgaser/Entschäumer wie beispielsweise Acetylendiole und ethoxylierte Acetylendiole, die üblicherweise 20 bis 40 mol Ethylenoxid pro mol Acetylendiol enthalten und gleichzeitig auch dispergierend wirken können, Mittel zur Regulierung der Viskosität, Verlaufshilfsmittel, Netzmittel (z.B. benetzend wirkende Tenside auf der Basis von ethoxylierten oder propoxylierten Fett- oder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel, Basen wie beispielsweise Triethanolamin oder Säuren, speziell Carbonsäuren wie beispielsweise Milchsäure oder Zitronensäure zur Regulierung des pH-Wertes. Wenn diese Mittel Bestandteil erfindungsgemäßer Tinten für das Ink-Jet-Verfahren sind, beträgt ihre Gesamtmenge in der Regel 2 Gew.-%, insbesondere 1 Gew.-%, bezogen auf das Gewicht der erfindungsgemäßen Farbmittelzubereitungen und insbesondere der erfindungsgemäßen Tinten für das Ink-Jet-Verfahren.

Weitere geeignete Zuschlagstoffe (D) sind gegebenenfalls alkoxylierte Acetylendiole, beispielsweise der allgemeinen Formel IV 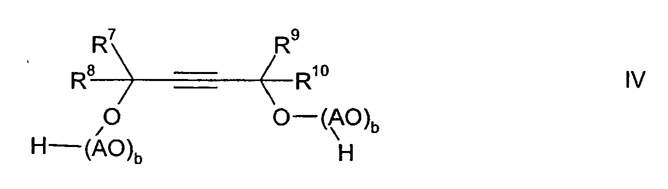 in denen die Variablen wie folgt definiert sind:
- AO: steht für gleiche oder verschiedene Alkylenoxideinheiten, beispielsweise Propylenoxideinheiten, Butylenoxideinheiten und insbesondere Ethylenoxideinheiten,
- R⁷, R⁸, R⁹, R¹⁰: sind jeweils gleich oder verschieden und gewählt aus C₁-C₁₀-Alkyl, unverzweigt oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl; und Wasserstoff;
- b: ist gleich oder verschieden und gewählt aus ganzen Zahlen im Bereich von 0 bis 50, bevorzugt 0 oder 1 bis 30 und besonders bevorzugt 3 bis 20;

AO ist wie oben stehend definiert.

In einer bevorzugten Ausführungsform der vorliegenden Erfindung sind R⁹ oder R⁷ gleich Methyl.

In einer bevorzugten Ausführungsform der vorliegenden Erfindung sind R⁹ und R⁷ gleich Methyl, und R⁸ und R¹⁰ gleich Isobutyl.

Andere bevorzugte Zuschlagstoffe sind gegebenenfalls alkoxylierte Siliziumverbindungen der Formel V

[(CH₃)₃Si-O]₂-Si(CH₃)-O(CH₂CH₂O)_{b}-H V

in der die Variable b wie vorstehend definiert ist.

Erfindungsgemäße Tinten für das Ink-Jet-Verfahren haben eine dynamische Viskosität im Bereich von 2 bis 80 mPa·s, bevorzugt 3 bis 40 mPa·s, besonders bevorzugt bis 25 mPa·s, gemessen bei 23°C nach DIN 53018.

Die Oberflächenspannung erfindungsgemäßer Tinten für das Ink-Jet-Verfahren beträgt in der Regel 24 bis 70 mN/m, insbesondere 25 bis 60 mN/m, gemessen bei 25°C nach DIN 53993.

Der pH-Wert erfindungsgemäßer Tinten für das Ink-Jet-Verfahren liegt im allgemeinen bei 5 bis 10, vorzugsweise bei 7 bis 9.

Erfindungsgemäße Tinten für das Ink-Jet-Verfahren zeigen insgesamt vorteilhafte Anwendungseigenschaften, vor allem gutes Anschreibverhalten und gutes Dauerschreibverhalten (Kogation) sowie, insbesondere bei Verwendung der besonders bevorzugten Lösungsmittelkombination, gutes Trocknungsverhalten, und ergeben Druckbilder hoher Qualität, d.h. hoher Brillanz und Farbtiefe sowie hoher Reib-, Licht-, Wasser- und Nassreibechtheit. Besonders geeignet sind sie zum Drucken auf gestrichenes und ungestrichenes Papier sowie Textil.

Ein weiterer Aspekt der vorliegenden Erfindung ist ein Verfahren zur Herstellung von erfindungsgemäßen Tinten für das Ink-Jet-Verfahren. Das erfindungsgemäße Verfahren zur Herstellung von Tinten für das Ink-Jet-Verfahren ist dadurch gekennzeichnet, dass man (A), (B), Wasser und gegebenenfalls (C) miteinander vermischt, beispielsweise in einem oder in mehreren Schritten.

In einer bevorzugten Ausführungsform der vorliegenden Erfindung vermischt man zunächst (A) mit (B) und setzt danach Photoinitiator (C) und Wasser zu.

In einer bevorzugten Ausführungsform der vorliegenden Erfindung vermischt man zunächst (A) mit (B) und setzt danach Photoinitiator (C) und Wasser und weiteres (A) oder optional weiteres (b) zu.

Als geeignete Vermischungstechniken sind beispielsweise Verrühren und intensives Schütteln zu nennen sowie das Dispergieren, beispielsweise in Kugelmühlen oder Rührwerkskugelmühlen.

In einer Ausführungsform der vorliegenden Erfindung geht man aus von einem oder mehreren Pigmenten (B), die in partikulärer Form vorliegen, d.h. in Form von Partikeln.

Bevorzugt geht man zur Durchführung der vorliegenden Erfindung von vordispergiertem Pigment (B) aus, das heißt, man dispergiert vor der dem Vermischen mit u.a. (A) und gegebenenfalls (C) ein oder mehrere Pigmente in einer Apparatur mit mindestens einem Additiv, beispielsweise mindestens einem Lösungsmittel, beispielsweise Wasser, C₁-C₄-Alkanol, Polyetherol, Diethylenglykol, Triethylenglykol, Tetraethylenglykol, n-Butylacetat vor. Weiterhin kann man Dispergieradditive während des Dispergier- oder Vordispergierprozesses zugeben. Als Dispergieradditive sind beispielsweise Verbindungen geeignet, die unten näher beschrieben werden. Andere geeignete Additive sind Biozide, beispielsweise 1,2-Benzisothiazolin-3-on ("BIT") (kommerziell erhältlich als Proxel®-Marken der Fa. Avecia Lim.) oder dessen Alkalimetallsalze; andere geeignete Biozide sind 2-Methyl-2H-isothiazol-3 ("MIT") und 5-Chlor-2-methyl-2H-isothiazol-3-on ("CIT").

Geeignete Dispergieradditive sind beispielsweise sulfatierte und alkylierte Polyalkylenglykole. Andere gut geeignete Dispergieradditive sind Naphthalinsulfonsäure-Formaldehyd-Kondensationsprodukte, die mit aliphatischen langkettigen Carbonsäuren wie beispielsweise Stearinsäure oder Palmitinsäure oder deren Anhydriden vermischt sein können. Besonders geeignet sind die in US 4,218,218 und in US 5,186,846 offenbarten Dispergieradditive.

Geeignete Dispergieradditive sind weiterhin insbesondere mehrfach alkoxylierte Fettalkohole, beispielsweise 3 bis 50-fach ethoxylierte unverzweigte C₁₀-C₂₀-Alkanole.

Als geeignete Apparaturen für das Vordispergieren bzw. Dispergieren sind beispielsweise Kugelmühlen, Rührwerkskugelmühlen, Ultraschallapparaturen, Hochdruckhomogenisatoren, Ultra-Thurax-Rührer und Schüttelapparaturen wie z.B. der Fa. Skandex zu nennen.

Als geeignete Zeitdauer für das Vordispergieren bzw. Dispergieren haben sich beispielsweise ½ Stunde bis 48 Stunden erwiesen, obwohl auch eine längere Zeitdauer denkbar ist. Bevorzugt ist eine Zeitdauer für das Vordispergieren bzw. Dispergieren von 1 bis 24 Stunden.

Druck- und Temperaturbedingungen beim Vordispergieren bzw. Dispergieren sind im Allgemeinen unkritisch, so hat sich beispielsweise Normaldruck als geeignet erwiesen. Als Temperaturen haben sich beispielsweise Temperaturen im Bereich von 10°C bis 100°C als geeignet erwiesen.

Die Reihenfolge der Zugabe bei dem Vermischen von (A), (B), gegebenenfalls (C) und gegebenenfalls (D) ist an sich unkritisch. So ist es in einer Variante der vorliegenden Erfindung möglich, dass man zunächst ein hyperverzweigtes Polyurethan (a) in Gegenwart von mindestens einer Verbindung mit mindestens einer ethylenischen Doppelbindung pro Molekül (b) synthetisiert und somit (A) herstellt, anschließend Pigment (B) mit (A) und (D) vermischt und dispergiert und danach mit Lösemittel wie beispielsweise Wasser verdünnt sowie mit mindestens einem (C) und evtl. weiteren (D) und weiteren (b) vermischt. In einer anderen Variante synthetisiert man hyperverzweigtes Polyurethan (a) in Abwesenheit von Verbindung mit mindestens einer ethylenischen Doppelbindung pro Molekül (b) und vermischt danach mit weiterem (b), dispergiert danach mit (B) in Anwesenheit von (D) und vermischt mit mindestens einem (C) und gegebenenfalls mit weiterem (b) und gegebenenfalls mit weiteren (D). In einer anderen Variante synthetisiert man hyperverzweigtes Polyurethan (a) in Abwesenheit von Verbindung mit mindestens einer ethylenischen Doppelbindung pro Molekül (b) und vermischt danach mit (b), dispergiert danach mit (B) und vermischt mit weiterem (b), mit (D) und gegebenenfalls mit (C). In einer anderen Variante synthetisiert man hyperverzweigtes Polyurethan (a) in Abwesenheit von Verbindung mit mindestens einer ethylenischen Doppelbindung pro Molekül (b) und vermischt danach mit (b), dispergiert danach mit (B) und vermischt mit weiterem (A), mit (D) und gegebenenfalls mit (C).

Das Gewichtsverhältnis von Pigment (B) zu Wasser kann in weiten Bereichen gewählt werden und kann beispielsweise im Bereich von 1:100 bis 1:2 liegen.

Während der Durchführung des Vordispergierens bzw. Dispergierens kann man übliche Mahlhilfsmittel zusetzen.

Der mittlere Durchmesser von Pigment (B) liegt nach dem Vordispergieren üblicherweise im Bereich von 20 nm bis 1,5 µm, bevorzugt im Bereich von 60 bis 200 nm, besonders bevorzugt im Bereich von 60 bis 150 nm und bezeichnet im Zusammenhang mit der vorliegenden Erfindung allgemein das Volumenmittel.

Wünscht man Ruß erfindungsgemäß als Pigment (B) einzusetzen, so bezieht sich der Partikeldurchmesser auf den mittleren Durchmesser der Primärpartikel.

Ein weiterer Aspekt der vorliegenden Erfindung ist ein Verfahren zum Bedrucken von flächigen oder dreidimensionalen Substraten nach dem Ink-Jet-Verfahren unter Verwendung von mindestens einer erfindungsgemäßen Tinte für das Ink-Jet-Verfahren, im Folgenden auch erfindungsgemäßes Druckverfahren genannt. Zur Durchführung des erfindungsgemäßen Druckverfahrens druckt man mindestens eine erfindungsgemäße Ink-Jet-Tinte auf ein Substrat auf. In einer bevorzugten Variante des erfindungsgemäßen Druckverfahrens druckt man mindestens eine erfindungsgemäße Ink-Jet-Tinte auf ein Substrat und behandelt anschließend mit aktinischer Strahlung.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Tinten für das Bubble-Jet-Verfahren und für das Verfahren mittels eines piezoelektrischen Kristalls.

Als Substratmaterialien sind geeignet:
cellulosehaltige Materialien wie Papier, Pappe, Karton, Holz und Holzwerkstoffe, die auch lackiert oder anderweitig beschichtet sein können,
metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
silikatische Materialien wie Glas, Porzellan und Keramik, die beschichtet sein können, polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
Leder, sowohl Naturleder als auch Kunstleder, als Glatt-, Nappa- oder Velourleder,
Lebensmittel und Kosmetika,
und insbesondere
textile Substrate wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe.

Als aktinische Strahlung ist elektromagnetische Strahlung mit einem Wellenlängenbereich von 200 nm bis 450 nm geeignet. Geeignet ist beispielsweise aktinische Strahlung mit einer Energie im Bereich von 70 mJ/cm² bis 2000 mJ/cm². Aktinische Strahlung kann man zweckmäßig beispielsweise kontinuierlich oder in Form von Blitzen einbringen.

In einer Ausführungsform der vorliegenden Erfindung kann man nach dem Bedrucken und vor dem Behandeln mit aktinischer Strahlung zwischentrocknen, beispielsweise thermisch oder mit IR-Strahlung. Geeignet sind beispielsweise Temperaturen im Bereich von 30 bis 120°C über einen Zeitraum im Bereich von 1 Minute bis 24 Stunden, bevorzugt bis zu 30 min, besonders bevorzugt bis zu 5 min. Als IR-Strahlung ist beispielsweise IR-Strahlung in einem Wellenbereich über 800 nm geeignet. Geeignete Vorrichtungen zum Zwischentrocknen sind beispielsweise Trockenschränke oder Vakuumtrockenschränke für thermische Zwischentrocknung, weiterhin IR-Lampen.

Auch die bei der Einwirkung von aktinischer Strahlung entwickelte Hitze kann zwischentrocknend wirken.

Eine weitere Ausführungsform der vorliegenden Erfindung sind Substrate, insbesondere textile Substrate, die nach einem der oben genannten erfindungsgemäßen Druckverfahren bedruckt wurden und sich durch besonders scharf gedruckte Bilder oder Zeichnungen sowie ausgezeichneten Griff auszeichnen. Außerdem weisen erfindungsgemäße bedruckte Substrate wenig "soft spots" auf.

Gemäß einer weiteren Ausführungsform der vorliegenden Erfindung kann man mindestens zwei, bevorzugt mindestens drei verschiedene erfindungsgemäße Tinten für das Ink-Jet-Verfahren zu Sets kombinieren, wobei verschiedene erfindungsgemäße Tinten jeweils unterschiedliche Pigmente mit jeweils unterschiedlicher Farbe enthalten.

Ein weiterer Gegenstand der vorliegenden Erfindung sind wasserlösliche strahlungshärtbare Produkte (A), erhältlich durch Vermischen und gegebenenfalls Umsetzung von
mindestens einem hyperverzweigten Polyurethan (a) mit
0,01 bis 25 Gew.-%, bevorzugt 0,1 bis 15 Gew.-% und besonders bevorzugt 0,2 bis 10 Gew.-% mindestens eine Verbindung, der allgemeinen Formel II(b)
oder durch Synthese von
mindestens einem hyperverzweigten Polyurethan (a)
in Gegenwart von 0,01 bis 25 Gew.-%, bevorzugt 0,1 bis 15 Gew.-% und besonders bevorzugt 0,2 bis 10 Gew.-% mindestens einer Verbindung mit mindestens einer ethylenischen Doppelbindung pro Molekül (b).

Dabei sind Angaben in Gew.-% auf (a) bezogen.

Hyperverzweigte Polyurethane (a) und Verbindungen der allgemeinen Formel II(b) sind vorstehend beschrieben.

In einer Ausführungsform der vorliegenden Erfindung handelt es sich bei mindestens einem hyperverzweigten Polyurethan (a) um ein hyperverzweigtes Polyurethan mit mindestens einer NCO-Gruppe.

In der Ausführungsform der vorliegenden Erfindung wählt man Verbindungen mit mindestens ethylenischen Doppelbindungen pro Molekül (b) aus Verbindungen der allgemein Formel II 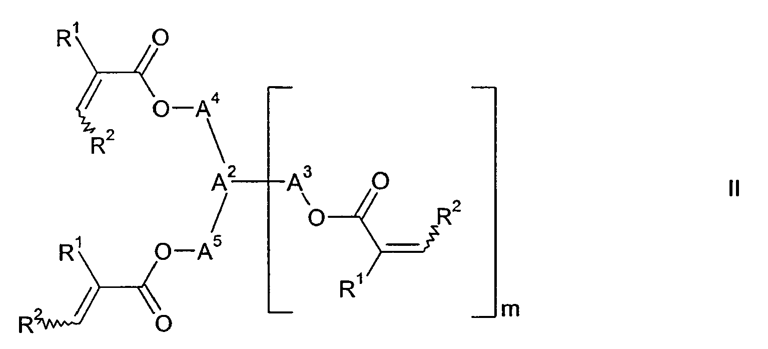
- R¹, R²: verschieden oder gleich und unabhängig voneinander gewählt aus Wasserstoff und C₁-C₁₀-Alkyl
- m: eine ganze Zahl von 0 bis 2,
- A²: CH₂ oder -CH₂-CH₂- oder R⁵-CH oder para-C₆H₄ für den Fall, dass m = 0, CH, C-OH, C-O-C(O)-CH=CH₂, C-O-CO-C(CH₃)=CH₂, R⁵-C oder 1,3,5-C₆H₃ für den Fall, dass m = 1,
und Kohlenstoff für den Fall, dass m = 2;
- R⁵: gewählt aus C₁-C₄-Alkyl und Phenyl,
- A³, A⁴, A⁵: gleich oder verschieden und gewählt aus C₁-C₂₀-Alkylen, cis- oder *tran*s-C₄-C₁₀-Cycloalkylen, C₁-C₂₀-Alkylen, in denen von einem bis zu sieben jeweils nicht benachbarte C-Atome durch Sauerstoff ersetzt sein können,
C₁-C₂₀-Alkylen, substituiert mit bis zu 4 Hydroxylgruppen, wobei in C₁-C₂₀-Alkylen von einem bis zu sieben jeweils nicht benachbarte C-Atome durch Sauerstoff ersetzt sein können, C₆-C₁₄-Arylen.

Besonders bevorzugte Beispiele für Verbindungen der allgemeinen Formel II sind Trimethylolpropantriacrylat, Triacrylat von dreifach ethoxyliertem Trimethylolpropan.

Ein weiterer sehr gut geeigneter Vertreter für Moleküle mit mindestens 2 terminalen ethylenisch ungesättigten Doppelbindungen pro Molekül ist Ethylenglycoldiacrylat.

In einer Ausführungsform der vorliegenden Erfindung enthalten erfindungsgemäße wasserlösliche strahlungshärtbare Produkte (A) mindestens einen Photoinitiator (C).

Bevorzugt handelt es sich bei mindestens einem Photoinitiator (C) um einen α-Zerfaller oder um einen Wasserstoff-abstrahierenden Photoinitiator.

Erfindungsgemäße wasserlösliche strahlungshärtbare Produkte (A) eignen sich besonders gut zur Herstellung von Tinten für das Ink-Jet-Verfahren.

Die Erfindung wird durch Arbeitsbeispiele erläutert.

Allgemeine Vorbemerkungen:
Der NCO-Gehalt wurde jeweils gemäß DIN 53185 titrimetrisch verfolgt.

Es wurde β-Alaninlösung AI-1 wie folgt hergestellt:
In einem Erlenmeyerkolben wurden 49,0 g β-Alanin in 500 g destilliertem Wasser gelöst, 55,6 g Triethylamin und 60,0 g Aceton zugegeben und die Mischung eine Stunde unter Rückfluss gekocht. Man ließ auf Zimmertemperatur abkühlen und erhielt β-Alaninlösung Al-1.

Es wurde β-Alaninlösung Al-2 wie folgt hergestellt:

In einem Erlenmeyerkolben wurden 128 g β-Alanin in 1000 g destilliertem Wasser gelöst, 146 g Triethylamin und 300 g Aceton zugegeben und die Mischung 30 Minuten unter Rückfluss gekocht. Man ließ auf Zimmertemperatur abkühlen und erhielt β-Alaninlösung Al-2.

Der mittlere Partikeldurchmesser von Pigmentpartikeln in Pigmentdispersionen wurde bestimmt mit Hilfe eines "Coulter LS230" der Fa. Coulter.

### I. Herstellung von erfindungsgemäßen wasserlöslichen strahlungshärtbaren Produkten

### I.1. Herstellung von nicht erfindungsgemäßem wasserlöslichem strahlungshärtbarem Produkt A. 1

In einem 2-1-Dreihalskolben, ausgestattet mit Rührer, Rückflusskühler, Gaseinleitrohr und Tropftrichter wurden unter Stickstoff 200 g (0,9 mol) Isophorondiisocyanat (IPDI) vorgelegt und unter Rühren innerhalb von einer Minute 60 g (0,45 mol) Trimethylolpropan (TMP), gemischt mit 260 g 2-Butanon, zugegeben. Danach dosierte man 0,1 g Din-butylzinn-dilaurat und erwärmte die resultierende Reaktionsmischung unter Rühren auf 60°C. Man verfolgte die Abnahme des NCO-Gehalts. Bei Erreichen eines NCO-Gehalts von 5,5 Gew.-% wurden 29,4 g (0,17 mol) 2,4-Toluylendiisocyanat zugesetzt und die resultierende Reaktionsmischung eine Stunde bei 60°C gerührt. Der NCO-Gehalt der resultierenden Reaktionsmischung betrug danach 6,3 Gew.-%. Danach gab man 31,0 g 2-Hydroxyethylacrylat (b.1), stabilisiert mit 100 mg 4-Hydroxy-TEMPO (Formel III), und weitere 0,1 g Di-n-butylzinn-dilaurat zu und rührte die resultierende Reaktionsmischung 5 Stunden bei 60°C. Der NCO-Gehalt der Mischung betrug danach 3,7 Gew.-%. Danach setzte man der resultierenden Reaktionsmischung 464,4 g auf 60°C temperierte β-Alaninlösung Al-1 zu.

Danach rührte man 30 min bei 60°C. Anschließend wurden Aceton und 2-Butanon am Rotationsverdampfer unter vermindertem Druck (2 mbar) bei 60°C abdestilliert und der Rückstand mit destilliertem Wasser aufgenommen. Man erhielt eine 30 Gew.-% wässrige Lösung von erfindungsgemäßem wasserlöslichem strahlungshärtbarem Produkt A.1.

### I.2. Herstellung von nicht erfindungsgemäßem wasserlöslichem strahlungshärtbarem Produkt A.2

In einem 2-I-Dreihalskolben, ausgestattet mit Rührer, Rückflusskühler, Gaseinleitrohr und Tropftrichter, wurden unter Stickstoff 500 g (2,35 mol) isophorondiisocyanat (lPDl) vorgelegt und unter Rühren innerhalb von einer Minute 150 g (0,45 mol) Trimethylolpropan (TMP), gemischt mit 650 g 2-Butanon, zugegeben. Danach dosierte man 0,3 g Di-n-butylzinn-dilaurat und erwärmte die resultierende Reaktionsmischung unter Rühren auf 60°C. Man verfolgte die Abnahme des NCO-Gehalts. Bei Erreichen eines NCO-Gehalts von 5,5 Gew.-% wurden 323 g trimeres Hexamethylendiisocyanat, gelöst in 323 g 2-Butanon, zugesetzt und die resultierende Reaktionsmischung eine Stunde bei 60°C gerührt. Der NCO-Gehalt der resultierenden Reaktionsmischung betrug danach 6,3 Gew.-%. Danach gab man 175 g 2-Hydroxyethylacrylat (b.1), stabilisiert mit 100 mg 4-Hydroxy-TEMPO (Formel III), und weitere 0,5 g Di-n-butylzinn-dilaurat zu und rührte die resultierende Reaktionsmischung 5 Stunden bei 60°C. Der NCO-Gehalt der Mischung betrug danach 2,3 Gew.-%. Danach setzte man der resultierenden Reaktionsmischung 1574 g auf 60°C temperierte β-Alaninlösung Al-2 zu.

Danach rührte man 30 min bei 60°C. Anschließend wurden Aceton und 2-Butanon am Rotationsverdampfer unter vermindertem Druck (2 mbar) bei 60°C abdestilliert und der Rückstand mit destilliertem Wasser aufgenommen. Man erhielt eine 30 Gew.-% wässrige Lösung von erfindungsgemäßem wasserlöslichem strahlungshärtbarem Produkt A.2.

### II. Anwendungsbeispiele

### II.1. Herstellung von Pigmentanreibungen, allgemeine Vorschrift

Pigmentanreibungen für organische Pigmente wurden auf einem Skandex mit 60 g Glaskugeln (Durchmesser 0,25 - 0,5 mm) hergestellt. Die Rezepturen sind in Tabelle 1 zusammengefasst. Nach Einwiegen der Ingredienzien und der Glaskugeln im Skandex wurde die resultierende Mischung für eine Zeit nach Tabelle 1 geschüttelt. Danach wurde eine Probe entnommen und der mittlere Durchmesser an dispergiertem Pigment bestimmt (Coulter Counter). Der pH-Wert wurde gemessen und - falls erforderlich - mit Triethanolamin auf 7,5 eingestellt. Man erhielt die Pigmentanreibungen PA.1.1 bis PA.1.3.

**Tabelle 1: Ingredienzien und Rezeptparameter für Pigmentanreibung PA.2.1**

| | |
|---|---|
| Ingredienz | PA.2.1 |
| (B) gemäß C.I., [g] | P.R. 122, 6 |
| (A.2)[g] | 20 |
| Propylenglykol [g] | 3 |
| Biozid 1 [g] | 0,3 |
| Phosphorsäuretri-n-butylester [g] | 0,05 |
| Destilliertes Wasser [g] | 30,65 |
| Dispergierzeit [h] | 2 |
| Mittlerer Durchmesser Pigment [nm] | 77 |

| | |
|---|---|
| Mengen von Ingredienzien sind stets in g angegeben, wenn nicht ausdrücklich anders angegeben. Es bedeutet: Biozid 1: 20 Gew.-% Lösung von 1,2-Benziso-thiazolin-3-on in Propylenglykol | |

### II.2 Formulierung von erfindungsgemäßen Tinten für das Ink-Jet-Verfahren

### II.2.1 Formulierung der erfindungsgemäßen magenta-farbenen Tinte T2.1 für das Ink-Jet-Verfahren

In einem Becherglas wurden durch Verrühren miteinander vermischt:

| | |
|---|---|
| 25 g | PA.2.1, |
| 1,6 g | Harnstoff |
| 0,16 g | Photoinitiator 2-Hydroxy-2-methylphenylpropanon (C.1) |

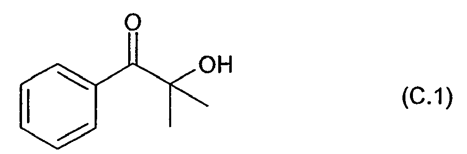

| | |
|---|---|
| 4,8 g | Triethylengykolmono-n-butylether, |
| 9,66 g | Poly-THF mit einem mittleren Molekulargewicht Mₙ von 250 g/mol |
| 8 g | Polyethylenglykol mit Mₙ = 400 g/mol, |
| 9,66 g | Glycerin, |
| 0,8 g | einer 20 Gew.-% Lösung von Benzisothiazolin-3-on in Propylenglykol, |
| 0,8 g | ethoxyliertes Trisiloxan der Formel [(CH₃)₃Si-O]₂-Si(CH₃)-O(CH₂CH₂O)₈-H |
| 84,6g | destilliertes Wasser. |

Man filtrierte über ein Glasfaserfilter (Ausschlussgröße 1 µm) und erhielt die erfindungsgemäße Tinte T2.1. Die erfindungsgemäße Tinte T2.1 hatte einen pH-Wert von 6,8 und eine dynamische Viskosität von 3,0 mPa·s.

### III. Druckversuche mit nicht erfindungsgemäßer Tinte T2.1 für das Ink-Jet-Verfahren

Die erfindungsgemäße Tinte T2.1 wurden in eine Kartusche gefüllt und mit einem Drucker Epson 3000 720 dpi auf Papier verdruckt. Man erhielt 5 DIN A4 Seiten mit einem Ausfall von maximal 5 Düsen. Die Reibechtheitstests ergaben gute Werte.

Weiterhin wurde die Tinte T2.1 mit einem Drucker Epson 3000 720 dpi auf Baumwolle verdruckt. Im Anschluss an den Druck trocknete man 5 Minuten in einem Trockenschrank bei 100°C und behandelte mit aktinischer Strahlung. Dazu setzte man ein UV-Bestrahlungsgerät der Fa. IST mit zwei verschiedenen UV-Strahlern: Eta Plus M-400-U2H, Eta Plus M-400-U2HC ein. Man belichtete 10 Sekunden und trug dabei eine Energie von 1500 mJ/cm² ein.

Man erhielt bedrucktes Substrat S2.1 gemäß Tabelle 3 und bestimmte die Reibechtheit nach ISO-105-D02:1993 und die Waschechtheit nach ISO 105-C06:1994.

**Tabelle 3: Echtheiten von bedruckter Baumwolle**

| Substrat | Reibechtheit (trocken) | Waschechtheit | Reibechtheit (nass) |
|---|---|---|---|
| S2.1 | 3 | 4 | 3 |

## Patentansprüche

1. Verwendung von wasserlöslichen strahlungshärtbaren Produkten (A), erhältlich durch
Vermischen und gegebenenfalls Umsetzung von
mindestens einem hyperverzweigten Polyurethan (a) mit
mindestens einer Verbindung der allgemeinen Formel II (b), 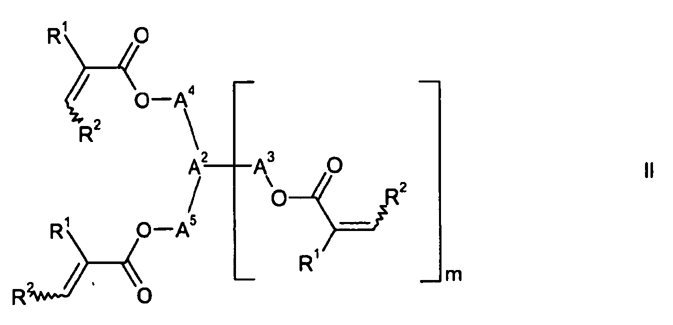
R¹, R² verschieden oder gleich und unabhängig voneinander gewählt aus Wasserstoff und C₁-C₁₀-Alkyl
m eine ganze Zahl von 0 bis 2,
A² CH₂ oder -CH₂-CH₂- oder R⁵-CH oder para-C₆H₄ für den Fall, dass m = 0, CH, C-OH, C-O-C(O)-CH=CH₂, C-O-CO-C(CH₃)=CH₂, R⁵-C oder 1,3,5-Cr,H₃ für den Fall, dass m = 1,
und Kohlenstoff für den Fall, dass m = 2;
R⁵ gewählt aus C₁-C₄-Alkyl und Phenyl,
A³, A⁴, A⁵ gleich oder verschieden und gewählt aus
C₁-C₂₀-Alkylen, cis- oder *trans*-C₄-C₁₀-Cycloalkylen, C₁-C₂₀-Alkylen, in denen von einem bis zu sieben jeweils nicht benachbarte C-Atome durch Sauerstoff ersetzt sein können,
C₁-C₂₀-Alkylen, substituiert mit bis zu 4 Hydroxylgruppen, wobei in C₁-C₂₀-Alkylen von einem bis zu sieben jeweils nicht benachbarte C-Atome durch Sauerstoff ersetzt sein können, C₆-C₁₄-Arylen,
oder durch Synthese von
mindestens einem hyperverzweigten Polyurethan (a)
in Gegenwart von mindestens einer Verbindung der allgemeinen Formel II(b)
zur Herstellung von wässrigen Tinten für das Ink-Jet-Verfahren.

2. Verwendung nach Anspruch 1, **dadurch gekennzeichnet, dass** es sich bei mindestens einem hyperverzweigten Polyurethan (a) um ein hyperverzweigtes Polyurethan (a) mit mindestens einer NCO-Gruppe handelt.

3. Verwendung nach Anspruch 1 oder 2, **dadurch gekennzeichnet, dass** es sich bei mindestens einem wasserlöslichen strahlungshärtbaren Produkt (A) um ein wassertösliches strahlungshärtbares Produkt (A) mit mindestens einer COOH-Gruppe pro Molekül handelt.

4. Wässrige Tinten für das Ink-Jet-Verfahren mit einer dynamischen Viskosität im Bereich von 2 bis 80 mPa.s, gemessen bei 23°C, enthaltend
(A) mindestens ein wasserlösliches strahlungshärtbares Produkt, erhältlich durch Vermischen und gegebenenfalls Umsetzung von
mindestens einem hyperverzweigten Polyurethan (a) mit
mindestens einer Verbindung mit der allgemeinen Formel II(b) 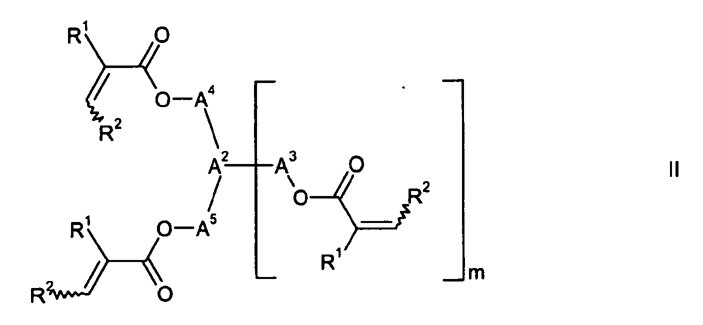
R¹, R² verschieden oder gleich und unabhängig voneinander gewählt aus Wasserstoff und C₁-C₁₀-Alkyl
m eine ganze Zahl von 0 bis 2,
A² CH₂ oder -CH₂-CH₂- oder R⁵-CH oder para-C₆H₄ für den Fall, dass m = 0, CH, C-OH, C-O-C(O)-CH=CH₂, C-O-CO-C(CH₃)=CH₂, R⁵-C oder 1,3,5-C₆H₃ für den Fall, dass m = 1,
und Kohlenstoff für den Fall, dass m = 2;
R⁵ gewählt aus C₁-C₄-Alkyl und Phenyl,
A³, A⁴, A⁵ gleich oder verschieden und gewählt aus C₁-C₂₀-Alkylen, cis- oder *trans*-C₄-C₁₀-Cycloalkylen, C₁-C₂₀-Alkylen, in denen von einem bis zu sieben jeweils nicht benachbarte C-Atome durch Sauerstoff ersetzt sein können, C₁-C₂₀-Alkylen, substituiert mit bis zu 4 Hydroxylgruppen, wobei in C₁-C₂₀-Alkylen von einem bis zu sieben jeweils nicht benachbarte C-Atome durch Sauerstoff ersetzt sein können, C₆-C₁₄-Arylen,
oder durch Synthese von
mindestens einem hyperverzweigten Polyurethan (a)
in Gegenwart von mindestens einer Verbindung der allgemeinen Formel II (b),
(B) mindestens ein Pigment.

5. Tinten nach Anspruch 4, **dadurch gekennzeichnet, dass** es sich bei mindestens einem wasserlöslichen strahlungshärtbaren Produkt (A) um ein wasserlösliches strahlungshärtbares Produkt (A) mit mindestens einer COOH-Gruppe pro Molekül handelt.

6. Tinten nach Anspruch 5, **dadurch gekennzeichnet, dass** man wasserlösliches strahlungshärtbares Produkt (A) mit mindestens einer COOH-Gruppe **dadurch** hergestellt hat, dass man während der Synthese von wasserlöslichem strahlungshärtbarem Produkt (A) β-Alanin zusetzt.

7. Tinten nach einem der Ansprüche 4 bis 6, enthaltend
(C) mindestens einen Photoinitiator.

8. Tinten nach Anspruch 7, **dadurch gekennzeichnet, dass** man Photoinitiatoren (C) wählt aus α-Zerfallem und Wasserstoff-abstrahierenden Photinitiatoren.

9. Tinten nach einem der Ansprüche 4 bis 8, enthaltend
1 bis 20 Gew.-% (A),
0,01 bis 20 Gew.% (B)
0 bis 10 Gew.% (C),
jeweils bezogen auf das Gesamtgewicht der Tinte.

10. Tinten nach einem der Ansprüche 4 bis 9, enthaltend
1,5 bis 15 Gew.-% (A),
1 bis 10 Gew.-% (B),
0,1 bis 6 Gew.-% (C),
jeweils bezogen auf das Gesamtgewicht der Tinte.

11. Verfahren zur Herstellung von Tinten nach einem der Ansprüche 4 bis 10, **dadurch gekennzeichnet, dass** man (A), (B), Wasser und gegebenenfalls (C) miteinander vermischt.

12. Verfahren zum Bedrucken von flächigen Substraten unter Verwendung von Tinten nach einem der Ansprüche 4 bis 10.

13. Verfahren zum Bedrucken von flächigen Substraten unter Verwendung von Tinten nach einem der Ansprüche 4 bis 10 und anschließendes Behandeln mit aktinischer Strahlung.

14. Wasserlösliche strahlungshärtbare Produkte (A), erhältlich durch
Vermischen und gegebenenfalls Umsetzung von
mindestens einem hyperverzweigten Polyurethan (a) mit
und 0,01 bis 25 Gew.-%, bezogen auf (a), mindestens einer Verbindung der allgemeinen Formel II (b), 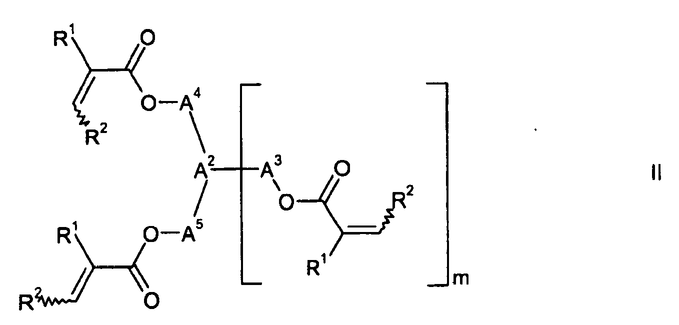
R¹, R² verschieden oder gleich und unabhängig voneinander gewählt aus Wasserstoff und C₁-C₁₀-Alkyl
m eine ganze Zahl von 0 bis 2,
A² CH₂ oder -CH₂-CH₂- oder R⁵-CH oder para-C₆H₄ für den Fall, dass m = 0, CH, C-OH, C-O-C(O)-CH=CH₂, C-O-CO-C(CH₃)=CH₂, R⁵-C oder 1,3,5-C₆H₃ für den Fall, dass m = 1,
und Kohlenstoff für den Fall, dass m = 2;
R⁵ gewählt aus C₁-C₄-Alkyl und Phenyl,
A³, A⁴, A⁵ gleich oder verschieden und gewählt aus
C₁-C₂₀-Alkylen, cis- oder *trans*-C₄-C₁₀-Cycloalkylen, C₁-C₂₀-Alkylen, in denen von einem bis zu sieben jeweils nicht benachbarte C-Atome durch Sauerstoff ersetzt sein können,
C₁-C₂₀-Alkylen, substituiert mit bis zu 4 Hydroxylgruppen, wobei in C₁-C₂₀-Alkylen von einem bis zu sieben jeweils nicht benachbarte C-Atome durch Sauerstoff ersetzt sein können, C₆-C₁₄-Arylen,
oder durch Synthese von
mindestens einem hyperverzweigten Polyurethan (a)
in Gegenwart von 0,01 bis 25 Gew.-%, bezogen auf (a), mindestens einer Verbindung der allgemeinen Formel II (b),

15. Wasserlösliche strahlungshärtbare Produkte nach Anspruch 14, **dadurch gekennzeichnet, dass** es sich bei mindestens einem hyperverzweigten Polyurethan (a) um ein hyperverzweigtes Polyurethan mit mindestens einer NCO-Gruppe handelt.

16. Wasserlösliche strahlungshärtbare Produkte nach Anspruch 14 oder 15, **dadurch gekennzeichnet, dass** es sich bei mindestens einem wasserlöslichen strahlungshärtbaren Produkt (A) um ein wasserlösliches strahlungshärtbares Produkten (A) mit mindestens einer COOH-Gruppe pro Molekül handelt.

17. Wasserlösliche strahlungshärtbare Produkte nach einem der Ansprüche 14 bis 16, **dadurch gekennzeichnet, dass** sie zusätzlich mindestens einen Photoinitiator (C) enthalten.

18. Wasserlösliche strahlungshärtbare Produkte nach Anspruch 17, **dadurch gekennzeichnet, dass** man dass man Photoinitiatoren (C) wählt aus α-Zerfallern und Wasserstoff-abstrahierenden Photoinitiatoren.

## Claims

1. The use of water soluble radiation curable products (A) obtainable by
mixing with or without reaction of
at least one hyperbranched polyurethane (a) with
at least one compound of the general formula II (b), 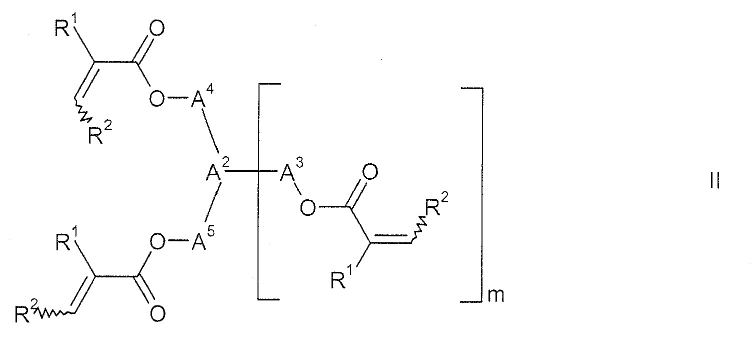
R¹ and R² are the same or different and are each independently selected from hydrogen and C₁-C₁₀-alkyl,
m is an integer from 0 to 2,
A² is CH₂ or -CH₂-CH₂- or R⁵-CH or para-C₆H₄ when m is = 0, CH, C-OH, C-O-C(O)-CH=CH₂, C-O-CO-C(CH₃)=CH₂, R⁵-C or 1,3,5-C₆H₃ when m is = 1,
and carbon when m is = 2;
R⁵ is selected from C₁-C₄-alkyl and phenyl,
A³, A⁴ and A⁵ are the same or different and are each selected from
C₁-C₂₀-alkylene, cis- or trans-C₄-C₁₀-cycloalkylene,
C₁-C₂₀-alkylene, in each of which from one up to seven carbon atoms which are each nonadjacent may be replaced by oxygen, C₁-C₂₀-alkylene which is substituted by up to 4 hydroxyl groups and in which from one up to seven carbon atoms which are each nonadjacent may be replaced by oxygen, C₆-C₁₄-arylene,
or by synthesis of
at least one hyperbranched polyurethane (a)
in the presence of at least one compound of the general formula II (b)
to produce aqueous inks for the ink jet process.

2. The use according to claim 1 wherein at least one hyperbranched polyurethane (a) is a hyperbranched polyurethane (a) having at least one NCO group per molecule.

3. The use according to claim 1 or 2 wherein at least one water soluble radiation curable product (A) is a water soluble radiation curable product (A) having at least one COOH group per molecule.

4. Aqueous inks for the ink jet process having a dynamic viscosity in the range from 2 to 80 mPa·s, measured at 23°C, comprising
(A) at least one water soluble radiation curable product obtainable by mixing with or without reaction of
at least one hyperbranched polyurethane (a) with
at least one compound having the general formula II (b) 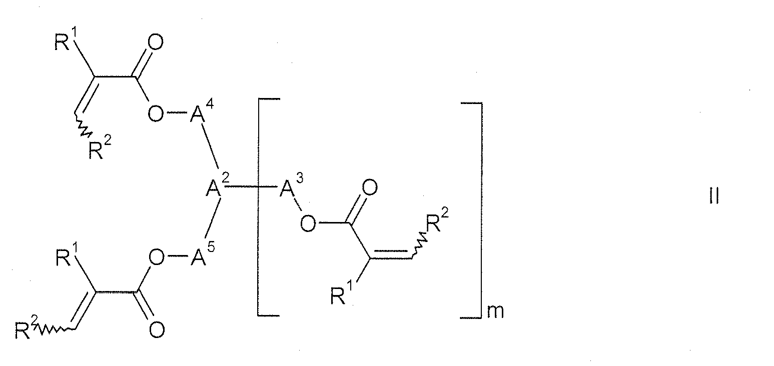
R¹ and R² are the same or different and are each independently selected from hydrogen and C₁-C₁₀-alkyl,
m is an integer from 0 to 2,
A² is CH₂ or -CH₂-CH₂- or R⁵-CH or para-C₆H₄ when m is = 0, CH, C-OH, C-O-C(O)-CH=CH₂, C-O-CO-C(CH₃)=CH₂, R⁵-C or 1,3,5-C₆H₃ when m is = 1, and carbon when m is = 2;
R⁵ is selected from C₁-C₄-alkyl and phenyl,
A ³, A⁴ and A⁵ are the same or different and are each selected from
C₁-C₂₀-alkylene, cis- or trans-C₄-C₁₀-cycloalkylene,
C₁-C₂₀-alkylene, in each of which from one up to seven carbon atoms which are each nonadjacent may be replaced by oxygen,
C₁-C₂₀-alkylene which is substituted by up to 4 hydroxyl groups and in which from one up to seven carbon atoms which are each nonadjacent may be replaced by oxygen, C₆-C₁₄-arylene,
or by synthesis of
at least one hyperbranched polyurethane (a)
in the presence of at least one compound of the general formula II (b),
(B) at least one pigment.

5. The inks according to claim 4 wherein at least one water soluble radiation curable product (A) is a water soluble radiation curable product (A) having at least one COOH group per molecule.

6. The inks according to claim 5 wherein water soluble radiation curable product (A) having at least one COOH group is prepared by adding β-alanine during the synthesis of water soluble radiation curable product (A).

7. The inks according to any one of claims 4 to 6 that comprise (C) at least one photoinitiator.

8. The inks according to claim 7 wherein photoinitiators (C) are selected from α-cleavage photoinitiators and hydrogen abstracting photoinitiators.

9. The inks according to any one of claims 4 to 8 that comprise
from 1 % to 20% by weight of (A),
from 0.01 % to 20% by weight of (B)
from 0% to 10% by weight of (C),
all based on the total weight of the ink.

10. The inks according to any one of claims 4 to 9 that comprise
from 1.5% to 15% by weight of (A),
from 1 % to 10% by weight of (B)
from 0.1 % to 6% by weight of (C),
all based on the total weight of the ink.

11. A process for producing inks according to any one of claims 4 to 10, which comprises mixing (A), (B), water and if appropriate (C) with one another.

12. The process for printing sheetlike substrates using inks according to any one of claims 4 to 10.

13. The process for printing sheetlike substrates using inks according to any one of claims 4 to 10 and subsequent treating with actinic radiation.

14. Water soluble radiation curable products (A) obtainable by
mixing with or without reaction of
at least one hyperbranched polyurethane (a) with
from 0.01 % to 25% by weight, based on (a), of at least one compound of the general formula II (b), 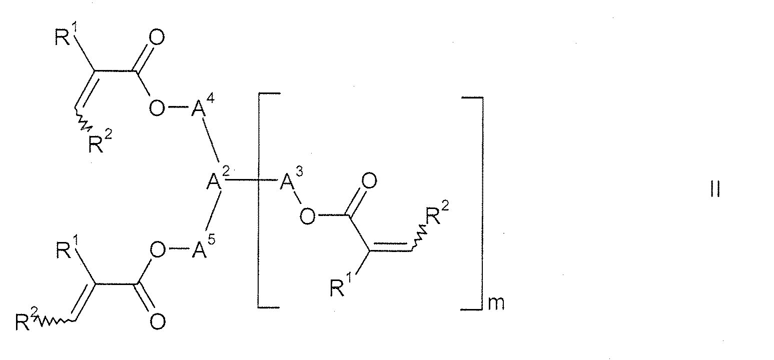
R¹ and R² are the same or different and are each independently selected from hydrogen and C₁-C₁₀-alkyl,
m is an integer from 0 to 2,
A² is CH₂ or -CH₂-CH₂- or R⁵-CH or para-C₆H₄ when m is = 0, CH, C-OH, C-O-C(O)-CH=CH₂, C-O-CO-C(CH₃)=CH₂, R⁵-C or 1,3,5-C₆H₃ when m is = 1,
and carbon when m is = 2;
R⁵ is selected from C₁-C₄-alkyl and phenyl,
A³, A⁴ and A⁵ are the same or different and are each selected from
C₁-C₂₀-alkylene, cis- or trans-C₄-C₁₀-cycloalkylene,
C₁-C₂₀-alkylene, in each of which from one up to seven carbon atoms which are each nonadjacent may be replaced by oxygen,
C₁-C₂₀-alkylene which is substituted by up to 4 hydroxyl groups and in which from one up to seven carbon atoms which are each nonadjacent may be replaced by oxygen, C₆-C₁₄-arylene,
or by synthesis of
at least one hyperbranched polyurethane (a)
in the presence of from 0.01 % to 25% by weight, based on (a), of at least one compound of the general formula II (b).

15. The water soluble radiation curable products according to claim 14 wherein at least one hyperbranched polyurethane (a) is a hyperbranched polyurethane (a) having at least one NCO group.

16. The water soluble radiation curable products according to claim 14 or 15 wherein at least one water soluble radiation curable product (A) is a water soluble radiation curable product (A) having at least one COOH group per molecule.

17. The water soluble radiation curable products according to any one of claims 14 to 16 that further comprise at least one photoinitiator (C).

18. The water soluble radiation curable products according to claim 17 wherein photoinitiators are selected from α-cleavage photoinitiators and hydrogen abstracting photoinitiators.

## Revendications

1. Utilisation de produits (A) durcissables par rayonnement et solubles dans l'eau, que l'on peut obtenir par :
mélange et le cas échéant réaction de :
au moins un polyuréthane hyperramifié (a) avec
au moins un composé de formule générale II (b), 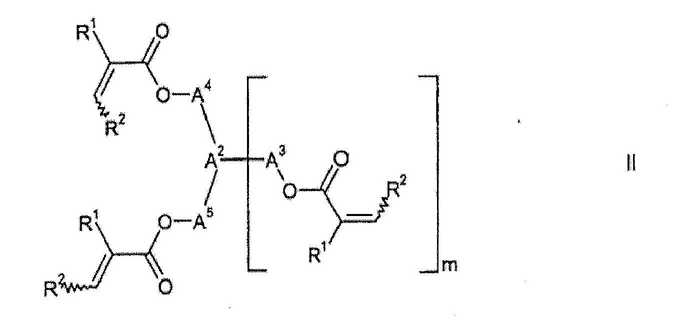
R¹, R² étant différents ou identiques et choisis indépendamment l'un de l'autre parmi un atome d'hydrogène et un alkyle C₁-C₁₀,
m étant un nombre entier entre 0 et 2,
A² étant CH₂ ou -CH₂-CH₂- ou R⁵-CH ou para-C₆H₄ si m = 0, CH, C-OH, C-O-C(O)-CH=CH₂, C-O-CO-C(CH₃)=CH₂, R⁵-C ou 1,3,5-C₆H₃ si m = 1,
et un atome de carbone si m = 2 ;
R⁵ étant choisi parmi un alkyle C₁-C₄ et un phényle,
A³, A⁴, A⁵ étant identiques ou différents et choisis parmi
des alkyles C₁-C₂₀, des cycloalkyles C₄-C₁₀ *cis* ou *trans,* des alkyles C₁-C₂₀ dans lesquels un à sept
atomes de carbone à chaque fois non voisins peuvent être remplacés par un atome d'oxygène,
des alkyles C₁-C₂₀, substitués avec jusqu'à 4 groupes hydroxyle, alkyles C₁-C₂₀ dans lesquels un à sept atomes de carbone à chaque fois non voisins peuvent être remplacés par un atome d'oxygène, des aryles C₆-C₁₄,
ou par synthèse de :
au moins un polyuréthane hyperramifié (a)
en présence d'au moins un composé de formule générale II (b)
pour la fabrication d'encres aqueuses pour le procédé d'impression à jet d'encre.

2. Utilisation selon la revendication 1, **caractérisée en ce que** ledit au moins un polyuréthane hyperramifié (a) est un polyuréthane hyperramifié (a) avec au moins un groupe NCO.

3. Utilisation selon la revendication 1 ou 2, **caractérisée en ce qu'**au moins un produit (A) durcissable par rayonnement et soluble dans l'eau est un produit (A) durcissable par rayonnement et soluble dans l'eau avec au moins un groupe COOH par molécule.

4. Encres aqueuses pour le procédé d'impression à jet d'encre avec une viscosité dynamique de 2 à 80 mPa·s, mesurée à 23°C, comprenant :
(A) au moins un produit durcissable par rayonnement et soluble dans l'eau, que l'on peut obtenir par mélange ou le cas échéant réaction d'au moins un polyuréthane hyperramifié (a) avec au moins un composé de formule générale II (b) 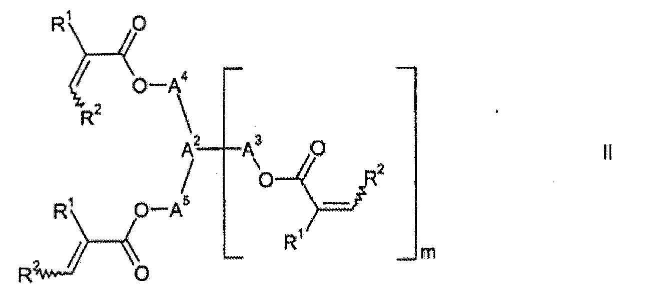
R¹, R² étant différents ou identiques et choisis indépendamment l'un de l'autre parmi un atome d'hydrogène et un alkyle C₁-C₁₀,
m étant un nombre entier entre 0 et 2,
A² étant CH₂ ou -CH₂-CH₂- ou R⁵-CH ou para-C₆H₄ si m = 0, CH, C-OH, C-O-C(O)-CH=CH₂, C-O-CO-C(CH₃)=CH₂, R⁵-C ou 1,3,5-C₆H₃ si m = 1, et un atome de carbone si m = 2 ;
R⁵ étant choisi parmi un alkyle C₁-C₄ et un phényle,
A³, A⁴, A⁵ étant identiques ou différents et choisis parmi
des alkyles C₁-C₂₀, des cycloalkyles C₄-C₁₀ *cis* ou *trans,* des alkyles C₁-C₂₀ dans lesquels un à sept atomes de carbone à chaque fois non voisins peuvent être remplacés par un atome d'oxygène,
des alkyles C₁-C₂₀, substitués avec jusqu'à 4 groupes hydroxyle, alkyles C₁-C₂₀ dans lesquels un à sept atomes de carbone à chaque fois non voisins peuvent être remplacés par un atome d'oxygène, des aryles C₆-C₁₄,
ou par synthèse de :
au moins un polyuréthane hyperramifié (a)
en présence d'au moins un composé de formule générale II (b),
(B) au moins un pigment.

5. Encres selon la revendication 4, **caractérisées en ce qu'**au moins un produit (A) durcissable par rayonnement et soluble dans l'eau est un produit (A) durcissable par rayonnement et soluble dans l'eau avec au moins un groupe COOH par molécule.

6. Encres selon la revendication 5, **caractérisées en ce que** l'on a fabriqué un produit (A) durcissable par rayonnement et soluble dans l'eau avec au moins un groupe COOH en ajoutant de la β-alanine pendant la synthèse du produit (A) durcissable par rayonnement et soluble dans l'eau.

7. Encres selon l'une des revendications 4 à 6, comprenant (C) au moins un photoinitiateur.

8. Encres selon la revendication 7, **caractérisées en ce que** l'on choisit le photoinitiateur (C) parmi des photoinitiateurs à décomposition α et à abstraction d'hydrogène.

9. Encres selon l'une des revendications 4 à 8, comprenant .
1 à 20 % en poids de (A),
0,01 à 20 % en poids de (B),
0 à 10 % en poids de (C),
chacun ramené au poids total de l'encre.

10. Encres selon les revendications 4 à 9, comprenant :
1,5 à 15 % en poids de (A),
1 à 10 % en poids de (B),
0,1 à 6 % en poids de (C),
chacun ramené au poids total de l'encre.

11. Procédé pour la fabrication d'encres selon l'une des revendications 4 à 10, **caractérisé en ce que** l'on mélange ensemble (A), (B), de l'eau et le cas échéant (C).

12. Procédé pour l'impression de substrats de grande surface en utilisant des encres selon l'une des revendications 4 à 10.

13. Procédé pour l'impression de substrats de grande surface en utilisant des encres selon l'une des revendications 4 à 10 et traitement ultérieur avec un rayonnement actinique.

14. Produits (A) durcissables par rayonnement et solubles dans l'eau, que l'on peut obtenir par :
mélange et le cas échéant réaction de :
au moins un polyuréthane hyperramifié (a) avec
de 0,01 à 25 % en poids ramené à (a) d'au moins un composé de formule générale II (b), 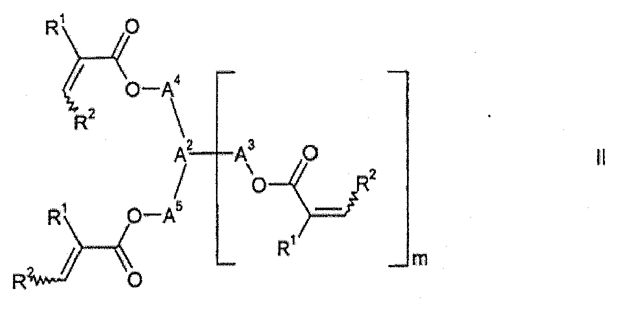
R¹, R² étant différents ou identiques et choisis indépendamment l'un de l'autre parmi un atome d'hydrogène et un alkyle C₁-C₁₀,
m étant un nombre entier entre 0 et 2,
A² étant CH₂ ou -CH₂-CH₂- ou R⁵-CH ou para-C₆H₄ si m = 0, CH, C-OH, C-O-C(O)-CH=C_{H2}, C-O-CO-C(CH₃)=CH₂, R⁵-C ou 1,3,5-C₆H₃ si m = 1, et un atome de carbone si m = 2 ;
R⁵ étant choisi parmi un alkyle C₁-C₄ et un phényle,
A³, A⁴, A⁵ étant identiques ou différents et choisis parmi :
des alkyles C₁-C₂₀, des cycloalkyles C₄-C₁₀ *cis* ou *trans,* des alkyles C₁-C₂₀ dans lesquels un à sept atomes de carbone à chaque fois non voisins peuvent être remplacés par un atome d'oxygène,
des alkyles C₁-C₂₀, substitués avec jusqu'à 4 groupes hydroxyle, alkyles C₁-C₂₀ dans lesquels un à sept atomes de carbone à chaque fois non voisins peuvent être remplacés par un atome d'oxygène, des aryles C₆-C₁₄,
ou par synthèse de :
au moins un polyuréthane hyperramifié (a)
en présence de 0,01 à 25 % en poids ramené à (a) d'au moins un composé de formule générale II (b).

15. Produits (A) durcissables par rayonnement et solubles dans l'eau selon la revendication 14, **caractérisés en ce que** ledit au moins un polyuréthane hyperramifié (a) est un polyuréthane hyperramifié (a) avec au moins un groupe NCO.

16. Produits (A) durcissables par rayonnement et solubles dans l'eau selon la revendication 14 ou 15, **caractérisés en ce qu'**au moins un produit (A) durcissable par rayonnement et soluble dans l'eau est un produit (A) durcissable par rayonnement et soluble dans l'eau avec au moins un groupe COOH par molécule.

17. Produits durcissables par rayonnement et solubles dans l'eau selon l'une des revendications 14 à 16, **caractérisés en ce qu'**ils contiennent en outre au moins un photoinitiateur (C).

18. Produits durcissables par rayonnement et solubles dans l'eau selon la revendication 17, **caractérisés en ce que** l'on choisit le photoinitiateur (C) parmi des photoinitiateurs à décomposition α et à abstraction d'hydrogène.
